(19)

Europäisches Patentamt

European Patent Office

Office européen des brevets

(11) **EP 4 227 361 A1**

(12) **EUROPEAN PATENT APPLICATION**

(43) Date of publication:
**16.08.2023  Bulletin 2023/33**

(21) Application number: **22156610.2**

(22) Date of filing: **14.02.2022**

(51) International Patent Classification (IPC):
***C08L 23/12*** (2006.01)   ***C08F 2/00*** (2006.01)
***C08F 210/06*** (2006.01)

(52) Cooperative Patent Classification (CPC):
(C-Sets available)
**C08F 110/06; C08F 210/06; C08F 210/16;**
**C08L 23/12;** C08L 2207/20          (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
• **Stockreiter, Wolfgang**
  **4021 Linz (AT)**
• **Pellecchia, Roberta**
  **4021 Linz (AT)**

• **Gitsas, Antonios**
  **4021 Linz (AT)**
• **Friedl, Bettina**
  **4021 Linz (AT)**
• **Sariomaa, Pauliina**
  **06850 Kulloo (FI)**
• **Schütz, Florian**
  **1020 Vienna (AT)**
• **Costa, Francis Reny**
  **4021 Linz (AT)**
• **Sageder, Anton**
  **4021 Linz (AT)**

(74) Representative: **Maiwald GmbH**
**Elisenhof**
**Elisenstraße 3**
**80335 München (DE)**

(54) **POLYPROPYLENE COMPOUND**

(57)    The present invention relates to a polypropylene compound (C), which is obtained by at least once compounding a first polypropylene composition (A) comprising a first polypropylene based resin (Al) and a first inorganic filler (A2) and a second polypropylene composition (B) comprising a second polypropylene based resin (Bl) and a second inorganic filler (B2), and to an article comprising said polypropylene compound (C).

EP 4 227 361 A1

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08F 210/06, C08F 4/651;**
**C08F 210/06, C08F 4/6546;**
**C08L 23/12, C08L 23/14, C08L 51/06,**
**C08K 5/52, C08K 7/20;**
C08F 110/06, C08F 2500/12;
C08F 110/06, C08F 2500/12, C08F 2500/35;
C08F 210/06, C08F 210/16, C08F 2500/08,
C08F 2500/12, C08F 2500/33, C08F 2500/34,
C08F 2500/17, C08F 2500/27, C08F 2500/35;
C08F 210/16, C08F 210/06, C08F 2500/12

## Description

The present invention relates to a polypropylene compound (C), which is obtained by at least once compounding a first polypropylene composition (A) comprising a polypropylene based resin (A1) and a first inorganic filler (A2) and a second polypropylene composition (B) comprising a polypropylene based resin (B1) and a second inorganic filler (B2).

## Technical background

Compositions suitable for the automotive industry typically contain one or more heterophasic polypropylene copolymer(s), and/or random heterophasic copolymers, and conventionally some inorganic filler.

One of the fundamental problems in polymer business is recycling. In the last years a big environmental and economical problem has been identified as polymer waste/scrap, e.g. from overproduction, returns or rejects. It is expected that re-compounding of such polymer waste or scrap will decrease the mechanical performance of the recycled material compared to the original virgin products.

There is a need in the art to handle polymer waste or scrap and transfer said waste or scrap into valuable high performance products instead of discarding said waste or scrap or recycling said waste or scrap in low performance products.

The present invention introduced a new method for recycling polypropylene based waste or scrap thereby obtaining a polypropylene compound with surprisingly good mechanical properties, which is suitable for automotive applications.

## Summary of the invention

The present invention relates to a polypropylene compound (C) obtainable by a process comprising the following steps:

(i) compounding at least components (A) and (B)

1 to 25 wt%, preferably 2 to 23 wt%, more preferably 3 to 20 wt% of a first polypropylene composition (A); and 75 to 99 wt%, preferably 77 to 98 wt%, more preferably 80 to 97 wt% of a second polypropylene composition (B), to obtain a first polypropylene compound (C1), wherein the weight amounts are based on the total weight of the first polypropylene compound (C1);

(ii) optionally compounding at least components (B) and (C1)

1 to 25 wt%, preferably 2 to 23 wt%, more preferably 3 to 20 wt% of the first polypropylene compound (C1); and 75 to 99 wt%, preferably 77 to 98 wt%, more preferably 80 to 97 wt% of the second polypropylene composition (B), to obtain a second polypropylene compound (C2), wherein the weight amounts are based on the total weight of the second polypropylene compound (C2);

(iii) optionally compounding at least components (B) and (C2)

1 to 25 wt%, preferably 2 to 23 wt%, more preferably 3 to 20 wt% of the second polypropylene compound (C2); and 75 to 99 wt%, preferably 77 to 98 wt%, more preferably 80 to 97 wt% of the second polypropylene composition (B), to obtain a third polypropylene compound (C3), wherein the weight amounts are based on the total weight of the third polypropylene compound (C3);

(iv) optionally compounding at least components (B) and (C3)

1 to 25 wt%, preferably 2 to 23 wt%, more preferably 3 to 20 wt% of the third polypropylene compound (C3); and 75 to 99 wt%, preferably 77 to 98 wt%, more preferably 80 to 97 wt% of the second polypropylene composition (B), to obtain a fourth polypropylene compound (C4), wherein the weight amounts are based on the total weight of the fourth polypropylene compound (C4);

(v) optionally compounding at least components (B) and (C4)

1 to 25 wt%, preferably 2 to 23 wt%, more preferably 3 to 20 wt% of the fourth polypropylene compound (C4); and 75 to 99 wt%, preferably 77 to 98 wt%, more preferably 80 to 97 wt% of the second polypropylene composition (B),

to obtain a fifth polypropylene compound (C5), wherein the weight amounts are based on the total weight of the fifth polypropylene compound (C5); and

(vi) obtaining the polypropylene compound (C);

wherein
the first polypropylene composition (A) comprises

(A1) 25 to 97 wt%, preferably 30 to 95 wt%, more preferably more preferably 35 to 93 wt%, most preferably 40 to 90 wt% of a first polypropylene-based resin having an amount of propylene monomer units of from 60 to 100 wt%, based on the total amount of monomer units of the resin;
(A2) 3 to 50 wt%, preferably 5 to 45 wt%, more preferably 7 to 43 wt%, most preferably 10 to 40 wt% of a first inorganic filler,

wherein the weight amounts are based on the total weight of the first polypropylene composition (A); and
the second polypropylene composition (B) comprises

(B1) 25 to 97 wt%, preferably 30 to 95 wt%, more preferably 35 to 93 wt%, most preferably 40 to 90 wt% of a second polypropylene-based resin having an amount of propylene monomer units of from 60 to 100 wt%, based on the total amount of monomer units of the resin;
(B2) 3 to 50 wt%, preferably 5 to 45 wt%, more preferably 7 to 43 wt%, most preferably 10 to 40 wt% of a second inorganic filler,

wherein the weight amounts are based on the total weight of the second polypropylene composition (B).

Further, the present invention relates to a process for producing a polypropylene compound (C) comprising the steps of:

(i) compounding at least components (A) and (B)

1 to 25 wt%, preferably 2 to 23 wt%, more preferably 3 to 20 wt% of a first polypropylene composition (A); and
75 to 99 wt%, preferably 77 to 98 wt%, more preferably 80 to 97 wt% of a second polypropylene composition (B), to obtain a first polypropylene compound (C1), wherein the weight amounts are based on the total weight of the first polypropylene compound (C1);

(ii) optionally compounding at least components (B) and (C1)

1 to 25 wt%, preferably 2 to 23 wt%, more preferably 3 to 20 wt% of the first polypropylene compound (C1); and
75 to 99 wt%, preferably 77 to 98 wt%, more preferably 80 to 97 wt% of the second polypropylene composition (B); to obtain a second polypropylene compound (C2), wherein the weight amounts are based on the total weight of the second polypropylene compound (C2);

(iii) optionally compounding at least components (B) and (C2)

1 to 25 wt%, preferably 2 to 23 wt%, more preferably 3 to 20 wt% of the second polypropylene compound (C2); and
75 to 99 wt%, preferably 77 to 98 wt%, more preferably 80 to 97 wt% of the second polypropylene composition (B) to obtain a third polypropylene compound (C3), wherein the weight amounts are based on the total weight of the third polypropylene compound (C3);

(iv) optionally compounding at least components (B) and (C3)

1 to 25 wt%, preferably 2 to 23 wt%, more preferably 3 to 20 wt% of the third polypropylene compound (C3); and
75 to 99 wt%, preferably 77 to 98 wt%, more preferably 80 to 97 wt% of the second polypropylene composition (B), to obtain a fourth polypropylene compound (C4), wherein the weight amounts are based on the total weight of the fourth polypropylene compound (C4);

(v) optionally compounding at least components (B) and (C4)

1 to 25 wt%, preferably 2 to 23 wt%, more preferably 3 to 20 wt% of the fourth polypropylene compound (C4), and 75 to 99 wt%, preferably 77 to 98 wt%, more preferably 80 to 97 wt% of the second polypropylene composition (B), to obtain a fifth polypropylene compound (C5), wherein the weight amounts are based on the total weight of the fifth polypropylene compound (C5); and

(vi) obtaining the polypropylene compound (C);

wherein
the first polypropylene composition (A) comprises

(A1) 25 to 97 wt%, preferably 30 to 95 wt%, more preferably 35 to 93 wt%, most preferably 40 to 90 wt% of a first polypropylene-based resin having an amount of propylene monomer units of from 60 to 100 wt%, based on the total amount of monomer units of the resin;
(A2) 3 to 50 wt%, preferably 5 to 45 wt%, more preferably 7 to 43 wt%, most preferably 10 to 40 wt% of a first inorganic filler,

wherein the weight amounts are based on the total weight of the first polypropylene composition (A); and
the second polypropylene composition (B) comprises

(B1) 25 to 97 wt%, preferably 30 to 95 wt%, more preferably 35 to 93 wt%, most preferably 40 to 90 wt% of a second polypropylene-based resin having an amount of propylene monomer units of from 60 to 100 wt%, based on the total amount of monomer units of the resin;
(B2) 3 to 50 wt%, preferably 5 to 45 wt%, more preferably 7 to 43 wt%, most preferably 10 to 40 wt% of a second inorganic filler,

wherein the weight amounts are based on the total weight of the second polypropylene composition (B).

Still further, the present invention relates to an article comprising the polypropylene compound (C) as described above or below.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a," "an," and the like refers to one or more.

A polypropylene compound in the sense of the present invention is a composition of components including polymer resins and inorganic fillers, which are produced in at least one compounding step, e.g. produced by melt extrusion, Thereby the weight majority, i.e. more than 50 wt% of the polymer resins in the polypropylene compound results from polypropylene resins.

Virgin polypropylene resins or blends denote polypropylene resins or blends as directly originating from the production process without intermediate use.

Mixed plastics is defined as the presence of low amounts of compounds usually not found in virgin polypropylene blends such as polystyrenes, polyamides, polyesters, wood, paper, limonene, aldehydes, ketones, fatty acids, metals, and/or long term decomposition products of stabilizers.

As a matter of definition "mixed plastics" can be equated with detectable amounts of polystyrene and/or polyamide-6 and/or limonene and/or fatty acids.

Mixed plastics thereby can originate from both post-consumer waste and industrial waste, as opposed to virgin polymers.

Post-consumer waste refers to objects having completed at least a first use cycle (or life cycle), i.e. having already served their first purpose.

In contrast to that, industrial waste refers to manufacturing scrap, respectively conversion scrap, which does not normally reach a consumer.

A polypropylene means a polymer being composed of units derived from propylene in an amount of more than 50 mol%.

The presence of a heterophasic nature can be easily determined by the number of glass transition points, like

EP 4 227 361 A1

in dynamic mechanical analysis (DMA), and/or high resolution microscopy, like scanning electron microscopy (SEM), transmission electron microscopy (TEM) or atomic force microscopy (AFM).

The term "XCS" refers to the xylene cold soluble fraction (XCS wt%) determined at 25 °C according to ISO 16152. The term "XCI" refers to the xylene cold insoluble fraction (XCI wt%) determined at 25 °C according to ISO 16152.

Reactor blend is a blend originating from the production in two or more reactors coupled in series or in a reactor having two or more reaction compartments. A reactor blend may alternatively result from blending in solution. A reactor blend stands in contrast to a compound as produced by melt extrusion.

If not indicated otherwise "%" refers to weight-% (wt%).

**Detailed description**

The present invention relates to a polypropylene compound (C), which is obtained by at least once compounding a first polypropylene composition (A) comprising a polypropylene based resin (A1) and a first inorganic filler (A2) and a second polypropylene composition (B) comprising a polypropylene based resin (B1) and a second inorganic filler (B2).

Second polypropylene composition (B)

The second polypropylene composition (B) comprises

(B1) 25 to 97 wt%, preferably 30 to 95 wt%, more preferably more preferably 35 to 93 wt%, most preferably 40 to 90 wt% of a second polypropylene-based resin having an amount of propylene monomer units of from 60 to 100 wt%, based on the total amount of monomer units of the base resin;

(B2) 3 to 50 wt%, preferably 5 to 45 wt%, more preferably 7 to 43 wt%, most preferably 20 to 40 wt% of a second inorganic filler,

wherein the weight amounts are based on the total weight of the second polypropylene composition (B).

The second polypropylene composition (B) can further comprise from 0 to 5 wt%, preferably from 1 to 5 wt%, more preferably from 1 to 4 wt%, most preferably from 1 to 3 wt% of a second adhesion promoter (B4), based on the total weight of the second polypropylene composition (B).

The second polypropylene composition (B) preferably has one or more, preferably all of the following properties:

- a melt flow rate $MFR_2$ (2.16 kg, 230°C) of from 4.0 to 10.0 g/10 min, preferably from 5.0 to 8.0 g/10 min;
- a Charpy Notched impact strength at 23°C of from 6 to 15 $kJ/m^2$, preferably from 8 to 12 $kJ/m^2$;
- a tensile modulus of from 4750 to 7500 MPa, preferably from 5000 to 6000 MPa; and/or
- a tensile strength of from 35 to 75 MPa, preferably from 45 to 65 MPa.

In one embodiment the second polypropylene composition (B) comprises, preferably consists of the second polypropylene-based resin (B1), the second inorganic filler (B2) and optionally the second adhesion promoter (B4) and conventional additives such as acid scavengers, antioxidants, colorants, light stabilizers, slip agents, anti-scratch agents, dispersing agents, processing aids, lubricants, pigments, anti-dripping agents and the like.

In said embodiment the second polypropylene composition (B) preferably comprises

50 to 97 wt%, preferably 55 to 95 wt%, more preferably 57 to 93 wt%, most preferably 60 to 90 wt% of the polypropylene-based resin (B1) and

3 to 50 wt%, preferably 5 to 45 wt%, more preferably 7 to 43 wt%, most preferably 10 to 40 wt% of the second inorganic filler (B2),

wherein the weight amounts are based on the total weight of the second polypropylene composition (B).

In said embodiment the second polypropylene composition (B) can further comprise from 0 to 5 wt%, preferably from 1 to 5 wt%, more preferably from 1 to 4 wt%, most preferably from 1 to 3 wt% of a second adhesion promoter (B4), based on the total weight of the second polypropylene composition (B).

In said embodiment the second polypropylene composition (B) can comprise 0 to 10 wt%, preferably 0 to 5 wt%, more preferably 0 to 3 wt%, most preferably 0 to 2 wt% additives, based on the total weight of the second polypropylene composition (B).

In a second embodiment the second polypropylene composition (B) comprises, preferably consists of the polypropylene-based resin (B1), the second inorganic filler (B2), a second flame retardant product (B3), optionally the second adhesion promoter (B4) and optionally conventional additives as described above.

In said embodiment the second polypropylene composition (B) preferably comprises

25 to 92 wt%, preferably 30 to 85 wt%, more preferably 35 to 78 wt%, most preferably 40 to 70 wt% of the polypropylene-based resin (B1),

3 to 50 wt%, preferably 5 to 45 wt%, more preferably 7 to 43 wt%, most preferably 10 to 40 wt% of the second inorganic filler (B2) and

5 to 40 wt%, preferably 10 to 35 wt%, more preferably 15 to 33 wt%, most preferably 20 to 30 wt% of the second flame retardant product (B3),

wherein the weight amounts are based on the total weight of the second polypropylene composition (B).

In said embodiment the second polypropylene composition (B) can further comprise from 0 to 5 wt%, preferably from 1 to 5 wt%, more preferably from 1 to 4 wt%, most preferably from 1 to 3 wt% of a second adhesion promoter (B4), based on the total weight of the second polypropylene composition (B).

In said embodiment the second polypropylene composition (B) can comprise 0 to 10 wt%, preferably 0 to 5 wt%, more preferably 0 to 3 wt%, most preferably 0 to 2 wt% additives, based on the total weight of the second polypropylene composition (B).

Especially in the presence of the second flame retardant agent (B3) the second polypropylene composition (B) can comprise an anti-dripping agent, such as a halogenated polyolefin, preferably a fluorinated polyolefin, for improving flame retardancy.

Suitable fluorinated polyolefins are fluorocarbon polyolefins or chlorofluorocarbon polyolefins. Especially preferred is polytetrafluoroethylene (PTFE).

If present, the anti-dripping agent is preferably present in an amount of 0.1 to 1.0 wt, more preferably 0.1 to 0.7 wt%, most preferably from 0.2 to 0.5 wt%, based on the total weight of the second polypropylene composition (B).

The second polypropylene composition (B) of said embodiment preferably has one or more, preferably all of the following properties:

- a melt flow rate $MFR_2$ (2.16 kg, 230°C) of from 4.0 to 10.0 g/10 min, preferably from 5.0 to 8.0 g/10 min;
- a Charpy Notched impact strength at 23°C of from 6 to 15 kJ/m$^2$, preferably from 8 to 12 kJ/m$^2$;
- a tensile modulus of from 4750 to 7500 MPa, preferably from 5000 to 6000 MPa;
- a tensile strength of from 35 to 75 MPa, preferably from 45 to 65 MPa; and/or
- a UL94 classification of V-0 in the UL94 flame retardancy test.

First polypropylene composition (A)

The first polypropylene composition (A) comprises

(A1) 25 to 97 wt%, preferably 30 to 95 wt%, more preferably 35 to 93 wt%, most preferably 40 to 90 wt% of a first polypropylene-based resin having an amount of propylene monomer units of from 60 to 100 wt%, based on the total amount of monomer units of the base resin;

(A2) 3 to 50 wt%, preferably 5 to 45 wt%, more preferably 7 to 43 wt%, most preferably 10 to 40 wt% of a first inorganic filler,

wherein the weight amounts are based on the total weight of the first polypropylene composition (A).

The first polypropylene composition (A) can further comprise from 0 to 5 wt%, preferably from 1 to 5 wt%, more preferably from 1 to 4 wt%, most preferably from 1 to 3 wt% of a first adhesion promoter (A4), based on the total weight of the first polypropylene composition (A).

In one embodiment the first polypropylene composition (A) comprises, preferably consists of the polypropylene-based resin (A1), the first inorganic filler (A2) and optionally the first adhesion promoter (A4) and conventional additives such as acid scavengers, antioxidants, colorants, light stabilizers, slip agents, anti-scratch agents, dispersing agents, processing aids, lubricants, pigments, anti-dripping agents and the like.

In said embodiment the first polypropylene composition (A) preferably comprises

50 to 97 wt%, preferably 55 to 95 wt%, more preferably 57 to 93 wt%, most preferably 60 to 90 wt% of the polypropylene-based resin (A1) and

3 to 50 wt%, preferably 5 to 45 wt%, more preferably 7 to 43 wt%, most preferably 10 to 40 wt% of the first inorganic filler (A2),

wherein the weight amounts are based on the total weight of the first polypropylene composition (A).

In said embodiment the first polypropylene composition (A) can further comprise from 0 to 5 wt%, preferably from 1 to 5 wt%, more preferably from 1 to 4 wt%, most preferably from 1 to 3 wt% of a first adhesion promoter (A4), based on the total weight of the first polypropylene composition (A).

In said embodiment the first polypropylene composition (A) can comprise 0 to 10 wt%, preferably 0 to 5 wt%, more preferably 0 to 3 wt%, most preferably 0 to 2 wt% additives, based on the total weight of the first polypropylene composition (A).

In another embodiment the first polypropylene composition (A) comprises, preferably consists of the polypropylene-based resin (A1), the first inorganic filler (A2), a first flame retardant product (A3), optionally the first adhesion promoter (A4) and optionally conventional additives as described above.

In said embodiment the first polypropylene composition (A) preferably comprises

25 to 92 wt%, preferably 30 to 85 wt%, more preferably 35 to 78 wt%, most preferably 40 to 70 wt% of the polypropylene-based resin (A1),
3 to 50 wt%, preferably 5 to 45 wt%, more preferably 7 to 43 wt%, most preferably 10 to 40 wt% of the first inorganic filler (A2), and
5 to 40 wt%, preferably 10 to 35 wt%, more preferably 15 to 33 wt%, most preferably 20 to 30 wt% of the first flame retardant product (A3),
wherein the weight amounts are based on the total weight of the first polypropylene composition (A).

In said embodiment the first polypropylene composition (A) can further comprise from 0 to 5 wt%, preferably from 1 to 5 wt%, more preferably from 1 to 4 wt%, most preferably from 1 to 3 wt% of a first adhesion promoter (A4), based on the total weight of the first polypropylene composition (A).

In said embodiment the first polypropylene composition (A) can comprise 0 to 10 wt%, preferably 0 to 5 wt%, more preferably 0 to 3 wt%, most preferably 0 to 2 wt% additives, based on the total weight of the first polypropylene composition (A).

Especially in the presence of the first flame retardant agent (A3) the first polypropylene composition (A) can comprise an anti-dripping agent, such as a halogenated polyolefin, preferably a fluorinated polyolefin, for improving flame retardancy.

Suitable fluorinated polyolefins are fluorocarbon polyolefins or chlorofluorocarbon polyolefins. Especially preferred is polytetrafluoroethylene (PTFE).

If present, the anti-dripping agent is preferably present in an amount of 0.1 to 1.0 wt, more preferably 0.1 to 0.7 wt%, most preferably from 0.2 to 0.5 wt%, based on the total weight of the first polypropylene composition (A).

The first polypropylene composition (A) preferably is a mixed plastics polypropylene blend from industrial waste, such as manufacturing scrap, conversion scrap, scrap from returns and/or scrap from rejects.

A mixed plastics polypropylene blend from industrial waste usually is a more homogeneous blend of polypropylene resins compared to a mixed plastics polypropylene blend from consumer waste which usually includes higher amounts of plastics and compounds not based on polypropylene resins such as polyethylenes, polystyrenes, polyamides, polyesters, wood, paper, limonene, aldehydes, ketones, fatty acids, metals, and/or long term decomposition products of stabilizers.

In one embodiment the first polypropylene composition (A) is a mixed plastics polypropylene blend from industrial waste, preferably a mixed plastics polypropylene blend from production waste.

In said embodiment the first polypropylene composition (A) preferably comprises from 75 to 100 wt%, preferably 80 to 100 wt%, still more preferably from 85 to 100 wt%, most preferably consists of industrial waste, preferably production waste, of the second polypropylene composition (B), based on the total weight of the first polypropylene composition (A).

Second polypropylene based resin (B1)

The second polypropylene composition (B) comprises a second polypropylene based resin (B1) having an amount of propylene monomer units of from 60 to 100 wt%, based on the total amount of monomer units of the base resin.

The second polypropylene based resin (B1) can comprise a single polypropylene component. The second polypropylene based resin (B1) can also comprise a mixture of two or more polypropylene components.

The second polypropylene based resin (B1) preferably comprises one or more polypropylene components in an amount of from 75 to 100 wt%, more preferably from 85 to 100 wt%, still more preferably from 88 to 100 wt%, based on the total weight of the second polypropylene based resin (B1).

The second polypropylene based resin (B1) can comprise components different from the one or more polypropylene components in an amount of from 0 to 25 wt%, more preferably from 0 to 15 wt%, still more preferably from 0 to 12 wt%, based on the total weight of the second polypropylene based resin (B1).

The components different from the one or more polypropylene components can be components which can be found in mixed plastics polymer blends such as e.g. polyethylenes, polystyrenes, polyamides, polyesters, wood, paper, limonene, aldehydes, ketones, fatty acids, metals, and/or long term decomposition products of stabilizers.

The second polypropylene based resin (B1) has an amount of propylene monomer units of from 60 to 100 wt%, preferably 65 to 99 wt%, still more preferably 70 to 98 wt%, based on the total amount of monomer units of the second polypropylene based resin (B1).

The second polypropylene based resin (B1) preferably has a melt flow rate $MFR_2$ (230 °C, 2.16 kg) determined according to ISO 1133 in the range of 5.0 to 300 g/10 min, more preferably in the range of 8.0 to 100 g/10 min, still more preferably in the range of like in the range of 10.0 to 75.0 g/10 min, like in the range of 15.0 to 50.0 g/10 min.

The one or more polypropylene components can be homopolymers or copolymers of propylene. Moreover, the one or more polypropylene components can comprise two or more polypropylene components which are different.

In case the one or more polypropylene components comprise a copolymer of propylene, it is preferred that the comonomer is selected from ethylene and/or $C_4$ to $C_8$ $\alpha$-olefins. It is especially preferred that the comonomer is ethylene. For one or more polypropylene components comprising more than one, like two different propylene polymer components which are copolymers of propylene, it is preferred that all propylene polymer components contain the same comonomer, like ethylene.

It is preferred that the one or more polypropylene components comprise a copolymer of propylene and ethylene and/or at least another $C_4$ to $C_8$ $\alpha$-olefin.

In a preferred embodiment of this invention, one or more polypropylene components comprise one or more heterophasic propylene copolymers (HECO) comprising

i) a matrix (M) being a polymer of propylene

ii) an elastomer (E) being a copolymer comprising units derived from propylene and ethylene and/or $C_4$ to $C_8$ $\alpha$-olefin.

The second polypropylene based resin (B1) is preferably selected from a virgin propylene-based polymer and a mixed plastics polypropylene blend selected from post-consumer waste or industrial waste.

In one embodiment the second polypropylene based resin (B1) is preferably a virgin propylene-based polymer.

The virgin propylene-based polymer can also be a mixture of two or more virgin propylene-based polymer components.

The virgin propylene-based polymer preferably comprises one or more polypropylene components in an amount of from 75 to 100 wt%, more preferably from 85 to 100 wt%, still more preferably from 88 to 100 wt%, based on the total weight of the virgin propylene-based polymer.

The virgin propylene-based polymer can comprise components different from the one or more polypropylene components in an amount of from 0 to 25 wt%, more preferably from 0 to 15 wt%, still more preferably from 0 to 12 wt%, based on the total weight of the virgin propylene-based polymer.

The components different from the one or more polypropylene components can be any virgin polymeric components which can be blended with polypropylene components such as e.g. polyethylenes, like virgin high density polyethylenes, virgin medium density polyethylenes, virgin linear low density polyethylenes or virgin low density polyethylenes.

The virgin propylene-based polymer preferably has a melt flow rate $MFR_2$ (230 °C, 2.16 kg) determined according to ISO 1133 in the range of 5.0 to 300 g/10 min, more preferably in the range of 8.0 to 100 g/10 min, still more preferably in the range of like in the range of 10.0 to 75.0 g/10 min, like in the range of 15.0 to 50.0 g/10 min.

The virgin propylene-based polymer can be a homopolymer or copolymer of propylene. Moreover, the virgin propylene-based polymer can comprise one or more virgin propylene-based polymer components, which are different, or other polymeric components, such as e.g. polyethylenes, like virgin high density polyethylenes, virgin medium density polyethylenes, virgin linear low density polyethylenes or virgin low density polyethylenes.

In case the virgin propylene-based polymer comprises, more preferably is a copolymer of propylene, it is preferred that the comonomer is selected from ethylene and/or $C_4$ to $C_8$ $\alpha$-olefins. It is especially preferred that the comonomer is ethylene. For virgin propylene-based polymers comprising more than one, like two different propylene polymer components which are copolymers of propylene, it is preferred that all propylene polymer components contain the same comonomer, like ethylene.

It is preferred that the virgin propylene-based polymer comprises, more preferably is a copolymer of propylene and ethylene and/or at least another $C_4$ to $C_8$ $\alpha$-olefin.

The virgin propylene-based polymer preferably has a comonomer content, like ethylene content, in the range of 2.0 to 25.0 mol-%, more preferably in the range of 4.0 to 20.0 mol-%, still more preferably in the range of 6.0 to 15.0 mol-%, like in the range of 6.2 to 12.0 mol-%.

In a preferred embodiment of this invention, virgin propylene-based polymer comprises, more preferably is a heterophasic propylene copolymer (HECO) comprising

i) a matrix (M) being a polymer of propylene

ii) an elastomer (E) being a copolymer comprising units derived from propylene and ethylene and/or $C_4$ to $C_8$ $\alpha$-olefin.

Generally in the present invention, the expression "heterophasic" indicates that the elastomer is (finely) dispersed in the matrix. In other words the elastomer forms inclusion in the matrix. Thus the matrix contains (finely) dispersed inclusions being not part of the matrix and said inclusions contain the elastomer. The term "inclusion" according to this invention shall preferably indicate that the matrix and the inclusion form different phases within the heterophasic polypropylene, said inclusions are for instance visible by high resolution microscopy, like electron microscopy or scanning force microscopy.

It is appreciated that the virgin propylene-based polymer comprising, more preferably being a heterophasic propylene copolymer (HECO) preferably has a rather low total comonomer content, preferably ethylene content. Thus, it is preferred that the comonomer content of the heterophasic propylene copolymer (HECO) is in the range from 4.0 to 17.0 mol-%, preferably in the range from 5.0 to 14.0 mol-%, more preferably in the range from 6.0 to 10.0 mol-%.

Heterophasic propylene copolymers (HECO) are generally featured by a xylene cold soluble (XCS) fraction and a xylene cold insoluble (XCI) fraction. For the purpose of the present application the xylene cold soluble (XCS) fraction of the heterophasic propylene copolymers (HECO) is essentially identical with the elastomer of said heterophasic propylene copolymers (HECO).

Accordingly when talking about the intrinsic viscosity and the ethylene content of elastomer of the heterophasic propylene copolymers (HECO) the intrinsic viscosity and the ethylene content of the xylene cold soluble (XCS) fraction of said heterophasic propylene copolymers (HECO) is meant.

Accordingly, the matrix (M) content, i.e. the xylene cold insoluble (XCI) content, in the propylene polymer (B1) being a heterophasic propylene copolymer (HECO) is preferably in the range of 75.0 to 93.0 wt%, more preferably in the range of 77.0 to 91.0 wt%, like 78.0 to 89.0 wt%.

On the other hand the elastomer (E), i.e. the xylene cold soluble (XCS) content, in the heterophasic propylene copolymer (HECO) is preferably in the range of 7.0 to 25.0 wt%, more preferably in the range of 9.0 to 23.0 wt%, like in the range of 11.0 to 22.0 wt%.

The first component of the heterophasic propylene copolymer (HECO) is the matrix (M).

Polypropylenes suitable for use as matrix (M) may include any type of isotactic or predominantly isotactic polypropylene homopolymer or random copolymer known in the art. Thus the polypropylene may be a propylene homopolymer or an isotactic random copolymer of propylene with ethylene and/or C4 to C8 alpha-olefins, such as for example 1-butene, 1-hexene or 1-octene, wherein the total comonomer content ranges from 0.05 to 10 wt%.

Further and preferably the polypropylene matrix (M) has a moderate melt flow rate. Accordingly, it is preferred that in the present invention the polypropylene matrix (M), i.e. the xylene cold insoluble (XCI) fraction of the virgin propylene-based polymer, has a melt flow rate $MFR_2$ (230°C, 2.16 kg) determined according to ISO1133 of in a range of 15.0 to 120 g/10 min, more preferably of 20.0 to 100 g/10 min, still more preferably of 30.0 to 80.0 g/10 min, like in the range of 35.0 to 50.0 g/10 min.

Furthermore, the polypropylene matrix (M) can be multimodal or bimodal in view of the molecular weight.

The expression "multimodal" or "bimodal" used throughout the present invention refers to the modality of the polymer, i.e.

- the form of its molecular weight distribution curve, which is the graph of the molecular weight fraction as a function of its molecular weight, and / or
- the form of its comonomer content distribution curve, which is the graph of the comonomer content as a function of the molecular weight of the polymer fractions.

However, it is preferred that the polypropylene matrix (M) is not multimodal or bimodal.

The second component of the heterophasic propylene copolymer (HECO) is the elastomer (E).

The elastomer (E) comprises, preferably consists of, units derivable from (i) propylene and (ii) ethylene and/or at least another C4 to C8 $\alpha$-olefin, more preferably units derivable from (i) propylene and (ii) ethylene and at least another $\alpha$-olefin selected form the group consisting of 1-butene, 1-pentene, 1-hexene, 1-heptene and 1-octene. The elastomeric copolymer (E) may additionally contain units derived from a conjugated diene, like butadiene, or a non-conjugated diene, however it is preferred that the elastomeric copolymer consists of units derivable from (i) propylene and (ii) ethylene and/or C4 to C8 $\alpha$-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly the elastomer (E) comprises at least units derivable from propylene and ethylene and may comprise other units derivable from a further α-olefin as defined in the previous paragraph. However it is in particular preferred that elastomer (E) comprises units only derivable from propylene and ethylene and optionally a conjugated diene, like butadiene, or a non-conjugated diene as defined in the previous paragraph, like 1,4-hexadiene. Thus an ethylene propylene non-conjugated diene monomer polymer (EPDM) and/or an ethylene propylene rubber (EPR) as elastomer (E) is especially preferred, the latter most preferred.

Like the matrix (M), the elastomer (E) can be unimodal or multimodal, like bimodal. Concerning the definition of unimodal and multimodal, like bimodal, it is referred to the definition above.

In the present invention the content of units derivable from propylene in the elastomer (E) equates with the content of propylene detectable in the xylene cold soluble (XCS) fraction. Accordingly the propylene detectable in the xylene cold soluble (XCS) fraction ranges from 20.0 to 80.0 mol-%, more preferably 35.0 to 70.0 mol-%. The comonomers present in the xylene cold soluble (XCS) fraction are those defined above for the elastomer (E). Thus in a specific embodiment the elastomer (E), i.e. the xylene cold soluble (XCS) fraction, comprises from 25.0 to 65.0 mol-%, more preferably 30.0 to 60.0 mol-%, still more preferably 35.0 to 50.0 mol-%, like 40.0 to 45.0 mol-%, units derivable from at least one of the comonomers defined above for the elastomer (E). Preferably the elastomer (E) is an ethylene propylene non-conjugated diene monomer polymer (EPDM) or an ethylene propylene rubber (EPR), the latter especially preferred, with a propylene and/or ethylene content as defined in this paragraph. In one preferred embodiment the comonomer of the elastomer (E) is ethylene only.

A further preferred requirement of the present invention is that the intrinsic viscosity (IV) of the xylene cold soluble (XCS) fraction of the virgin propylene-based polymer being a heterophasic propylene copolymer (HECO) is rather low. Accordingly it is appreciated that the intrinsic viscosity of the xylene cold soluble (XCS) fraction of the virgin propylene-based polymer being a heterophasic propylene copolymer (HECO) is below 3.5 dl/g, more preferably not more than 3.4 dl/g. Even more preferred, the intrinsic viscosity of the xylene cold soluble (XCS) fraction of the virgin propylene-based polymer being a heterophasic propylene copolymer (HECO) is in the range of 1.8 to below 3.5 dl/g, more preferably in the range 1.9 to 3.4 dl/g, like 2.0 to 3.4 dl/g. The intrinsic viscosity is measured according to ISO 1628 in decalin at 135 °C.

Preferably, the propylene content of the heterophasic propylene copolymer (HECO) is 85.0 to 96.0 wt%, more preferably 88.0 to 94.0 wt%, based on total weight of the heterophasic propylene copolymer (HECO), more preferably based the amount of the matrix (M) and the elastomeric copolymer (E) together.

The heterophasic propylene copolymer (HECO) preferably has one or more, preferably all of the following properties:

- a melt flow rate $MFR_2$ (2.16 kg, 230°C) of from 10 to 30 g/10 min, preferably from 15 to 25 g/10 min;
- a flexural modulus of from 1200 to 1750 MPa, preferably from 1400 to 1600 MPa;
- a tensile modulus of from 1200 to 1750 MPa, preferably from 1400 to 1600 MPa;
- a tensile strain at yield of from 1 to 10%, preferably from 3 to 7%;
- a tensile stress at yield of from 15 to 40 MPa, preferably from 20 to 35 MPa;
- a heat deflection temperature of from 90 to 120°C, preferably from 95 to 110°C;
- a Charpy Notched impact strength at 23°C of from 4 to 15 $kJ/m^2$, preferably from 6 to 12 $kJ/m^2$; and/or
- a Charpy Notched impact strength at -20°C of from 2 to 10 $kJ/m^2$, preferably from 3 to 7 $kJ/m^2$.

The heterophasic propylene copolymer (HECO) can be produced by blending the matrix (M) and the elastomer (E). However, it is preferred that the heterophasic propylene copolymer (HECO) is produced in a sequential step process, using reactors in serial configuration and operating at different reaction conditions. As a consequence, each fraction prepared in a specific reactor may have its own molecular weight distribution and/or comonomer content distribution.

The heterophasic propylene copolymer (HECO) according to this invention is preferably produced in a sequential polymerization process, i.e. in a multistage process, known in the art, wherein the (semi)crystalline propylene polymer (M) is produced at least in one slurry reactor, preferably in a slurry reactor and optionally in a subsequent gas phase reactor, and subsequently the elastomer (E) is produced at least in one, i.e. one or two, gas phase reactor(s).

Accordingly it is preferred that heterophasic propylene copolymer (HECO) is produced in a sequential polymerization process comprising the steps of

(a) polymerizing propylene and optionally at least one ethylene and/or $C_4$ to $C_8$ α-olefin in a first reactor (R1) obtaining the first polypropylene fraction of the matrix (M), preferably said first polypropylene fraction is a propylene homopolymer,

(b) optionally transferring the first polypropylene fraction into a second reactor (R2),

(c) optionally polymerizing in the second reactor (R2) and in the presence of said first polypropylene fraction propylene and optionally at least one ethylene and/or $C_4$ to $C_8$ $\alpha$-olefin obtaining thereby a second polypropylene fraction, preferably said second polypropylene fraction is a second propylene homopolymer, said first polypropylene fraction and optionally said second polypropylene fraction form the matrix (M), i.e. the matrix of the heterophasic propylene copolymer (HECO),

(d) transferring the matrix (M) of step (c) into a third reactor (R3),

(e) polymerizing in the third reactor (R3) and in the presence of the matrix (M) obtained in step (a) or (c) propylene and ethylene to obtain the elastomer (E) dispersed in the matrix (M), the matrix (M) and the elastomer (E) form the propylene polymer (B1) being a heterophasic propylene copolymer (HECO).

It is preferred that the heterophasic propylene copolymer (HECO) is prepared in the presence of

(a) a Ziegler-Natta catalyst comprising compounds (TC) of a transition metal of Group 4 to 6 of IUPAC, a Group 2 metal compound (MC) and an internal donor (ID);

(b) optionally a co-catalyst (Co), and

(c) optionally an external donor (ED).

This Ziegler-Natta catalyst can be any stereospecific Ziegler-Natta catalyst for propylene polymerization, which preferably is capable of catalyzing the polymerization and copolymerization of propylene and optional comonomers at a pressure of 500 to 10000 kPa, in particular 2500 to 8000 kPa, and at a temperature of 40 to 110°C, in particular of 60 to 110°C.

Preferably, the Ziegler-Natta catalyst comprises a high-yield Ziegler-Natta type catalyst including an internal donor component, which can be used at high polymerization temperatures of 80°C or more. Such high-yield Ziegler-Natta catalyst can comprise a succinate, a diether, a citraconate, a phthalate etc., or mixtures therefrom as internal donor (ID). Preferably, the internal donor (ID) is free of phthalate compounds.

According to one preferred embodiment of the present invention, the virgin propylene-based polymer consists of the heterophasic propylene copolymer (HECO).

In another embodiment, the virgin propylene-based polymer comprises the heterophasic propylene copolymer (HECO) and one or more further homo- or copolymers of propylene such as further heterophasic propylene copolymers, or other polymeric compounds, such as e.g. polyethylenes, like virgin high density polyethylenes, virgin medium density polyethylenes, virgin linear low density polyethylenes or virgin low density polyethylenes. In case the virgin propylene-based polymer comprises further copolymers of propylene such as further heterophasic propylene copolymers, it is preferred that the heterophasic propylene copolymer (HECO) and the further copolymers of propylene contain the same comonomer, preferably ethylene.

First polypropylene-based resin (A1)

The first polypropylene composition (A) comprises a first polypropylene-based resin (A1).

The first polypropylene-based resin (A1) can comprise a single polypropylene component.

The first polypropylene-based resin (A1) can also comprise a mixture of two or more polypropylene components.

The first polypropylene-based resin (A1) preferably comprises one or more polypropylene components in an amount of from 75 to 100 wt%, more preferably from 85 to 100 wt%, still more preferably from 90 to 100 wt%, based on the total weight of the first polypropylene-based resin (A1).

The first polypropylene-based resin (A1) can comprise components different from the one or more polypropylene components in an amount of from 0 to 25 wt%, more preferably from 0 to 15 wt%, still more preferably from 0 to 10 wt%, based on the total weight of the first polypropylene-based resin (A1).

The components different from the one or more polypropylene components can be components which can be found in mixed plastics polymer blends such as e.g. polyethylenes, polystyrenes, polyamides, polyesters, wood, paper, limonene, aldehydes, ketones, fatty acids, metals, and/or long term decomposition products of stabilizers.

Polyethylenes can be selected from high density polyethylenes, medium density polyethylenes, linear low density polyethylenes, low density polyethylenes or mixtures thereof.

The first polypropylene-based resin (A1) has an amount of propylene monomer units of from 60 to 100 wt%, preferably 65 to 99 wt%, still more preferably 70 to 98 wt%, based on the total amount of monomer units of the first polypropylene-based resin (A1)

The first polypropylene-based resin (A1) preferably has a melt flow rate $MFR_2$ (230 °C, 2.16 kg) determined according to ISO 1133 in the range of 5.0 to 300 g/10 min, more preferably in the range of 8.0 to 100 g/10 min, still more preferably in the range of like in the range of 10.0 to 75.0 g/10 min, like in the range of 15.0 to 50.0 g/10 min.

The one or more polypropylene components can be homopolymers or copolymers of propylene. Moreover, the one or more polypropylene components can comprise two or more polypropylene components which are different.

In case the one or more polypropylene components comprise a copolymer of propylene, it is preferred that the comonomer is selected from ethylene and/or $C_4$ to $C_8$ $\alpha$-olefins. It is especially preferred that the comonomer is ethylene. For one or more polypropylene components comprising more than one, like two different propylene polymer components which are copolymers of propylene, it is preferred that all propylene polymer components contain the same comonomer, like ethylene.

It is preferred that the one or more polypropylene components comprise a copolymer of propylene and ethylene and/or at least another $C_4$ to $C_8$ $\alpha$-olefin.

In a preferred embodiment of this invention, one or more polypropylene components comprise one or more heterophasic propylene copolymers (HECO) comprising

    i) a matrix (M) being a polymer of propylene
    ii) an elastomer (E) being a copolymer comprising units derived from propylene and ethylene and/or $C_4$ to $C_8$ $\alpha$-olefin.

In one specific embodiment the one or more polypropylene components comprise one or more polypropylene components as defined for the second polypropylene-based resin (B1) as described above or below.

First inorganic filler (A2) and second inorganic filler (B2)

The first polypropylene composition (A) comprises a first inorganic filler (A2). The first inorganic filler (A2) can also be a mixture of two or more first inorganic fillers (A2).

The second polypropylene composition (B) comprises a second inorganic filler (B2). The second inorganic filler (B2) can also be a mixture of two or more second inorganic fillers (B2).

The first inorganic filler (A2) and the second inorganic filler (B2) are preferably independently selected from the inorganic filler as specified below.

The first inorganic filer (A2) and the second inorganic filler (B2) can be the same or different. It is preferred that the first inorganic filler (A2) and the second inorganic filler (B2) are the same.

The following description of the preferred embodiments of the inorganic filler independently applies for both the first inorganic filler (A2) and the second inorganic filler (B2):
The inorganic filler can be any inorganic filler suitable for polypropylene compositions.

It is preferred that the second inorganic filler is selected from the group consisting of fibers, talc and wollastonite.

In one preferred embodiment the inorganic filler are fibers (F) selected from the group consisting of glass fibers, carbon fibers, polymeric fibers, cellulose fibers, metal fibers, mineral fibers, ceramic fibers and mixtures thereof. More preferably, the fibers (F) are glass fibers and/or carbon fibers.

It is especially preferred that the fibers (F) are glass fibers (GF). Preferably, the glass fibers (GF) are cut glass fibers, also known as short glass fibers (SGF) or chopped strands, and/or long glass fibers (LGF), preferably long glass fibers (LGF) obtained from glass rovings.

It is particularly preferred that the fibers (F) are short glass fibers (SGF) or chopped strands.

The short glass fibers (SGF) or chopped strands used in the polypropylene composition (A) or the second polypropylene composition (B) preferably have an initial average length in the range of from 2.0 to 10.0 mm, more preferably in the range of 2.3 to 9.0 mm, still more preferably in the range of 2.5 to 8.0 mm, like in the range of 3.0 to 7.0 mm. The initial average length of the short glass fibers (SGF) or chopped strands is usually provided by the supplier, as the average length of the short fibers (SFG) or the chop length of the chopped strands before melt blending with components of the first polypropylene composition (A) or the second polypropylene composition (B).

The short glass fibers (SGF) or chopped strands used in the polypropylene composition (A) or the second polypropylene composition (B) preferably have an average diameter of from 5 to 20 $\mu$m, more preferably from 6 to 18 $\mu$m, still more preferably 8 to 16 $\mu$m.

Preferably, the short glass fibers (SGF) or chopped strands have an initial aspect ratio of 125 to 650, preferably of 150 to 500, more preferably 200 to 450. The aspect ratio is the relation between average length and average diameter of the fibers.

The initial average length and initial average aspect ratio of the short glass fibers (SGF) or chopped strands refer to the values of the raw material as provided by the supplier.

First adhesion promoter (A4) and second adhesion promoter (B4)

The first polypropylene composition (A) can further comprise a first adhesion promoter (A4).

The second polypropylene composition (B) can further comprise a second adhesion promoter (B4).

The first adhesion promoter (A4) and the second adhesion promoter (B4) can be the same or different. It is preferred that the first adhesion promoter (A4) and the second adhesion promoter (B4) are the same.

The first adhesion promoter (A4) and the second adhesion promoter (B4) are preferably independently selected from the adhesion promoter as specified below.

For embodiments of the present invention wherein the first inorganic filler (A2) or the second inorganic filler (B2) are glass fibers and/or carbon fibers, it is preferred that first polypropylene composition (A) or the second polypropylene composition (B) comprises the adhesion promoter (A4)/(B4).

The following description of the preferred embodiments of the adhesion promoter independently applies for both the first adhesion promoter (A4) and the second adhesion promoter (B4):
The adhesion promoter can be any adhesion promoter suitable for polypropylene based resins.

The adhesion promoter is preferably a polar modified polypropylene (PM-PP) homo- or copolymer.

The polar modified polypropylene (PM-PP) homo- or copolymer comprises a low molecular weight compound having reactive polar groups. Modified polypropylene homopolymers and copolymers, like copolymers of propylene and ethylene or with other $\alpha$-olefins, e.g. C4 to C10 $\alpha$-olefins, are most preferred, as they are highly compatible with the polypropylene-based resin of the first polypropylene composition (A) or the propylene polymer (B1) of the second polypropylene composition (B).

In terms of structure, the polar modified polypropylene (PM-PP) homo- or copolymer are preferably selected from graft homo- or copolymers.

In this context, preference is given to polar modified polypropylene (PM-PP) homo- or copolymers containing groups derived from polar compounds, in particular selected from the group consisting of acid anhydrides, carboxylic acids, carboxylic acid derivatives, primary and secondary amines, hydroxyl compounds, oxazoline and epoxides, and also ionic compounds.

Specific examples of said polar compounds are unsaturated cyclic anhydrides and their aliphatic diesters, and the diacid derivatives. In particular, one can use maleic anhydride and compounds selected from C1 to C10 linear and branched dialkyl maleates, C1 to C10 linear and branched dialkyl fumarates, itaconic anhydride, C1 to C10 linear and branched itaconic acid dialkyl esters, acrylic acid, maleic acid, fumaric acid, itaconic acid and mixtures thereof.

Particular preference is given to use a polypropylene homo- or copolymer grafted with maleic anhydride or acrylic acid as the polar modified polypropylene (PM-PP) homo- or copolymer, i.e. the adhesion promoter.

The modified polymer, i.e. the adhesion promoter, can be produced in a simple manner by reactive extrusion of the polymer, for example with maleic anhydride or acrylic acid in the presence of free radical generators (like organic peroxides), as disclosed for instance in US 4,506,056, US 4,753,997 or EP 1 805 238.

Preferred amounts of groups derived from polar compounds in the polar modified polypropylene (PM-PP) homo- or copolymer, i.e. the adhesion promoter, are from 0.5 to 5.0 wt%. For example, the amount may be in the range of 0.5 wt% to 4.5 wt%, preferably in the range of 0.5 wt% to 4.0 wt%, more preferably in the range of 0.5 wt% to 3.5 wt%.

Preferred values of the melt flow rate $MFR_2$ (230 °C, 2.16 kg) for the polar modified polypropylene (PM-PP) homo- or copolymer, i.e. for the adhesion promoter, are from 20.0 to 400 g/10 min. It is particularly preferred that the polar modified polypropylene (PM-PP) homo- or copolymer has a melt flow rate $MFR_2$ (230 °C, 2.16 kg) in the range of 40.0 to 300 g/10 min, more preferably in the range of 50.0 to 250 g/10 min.

In one preferred embodiment of the present invention, the adhesion promoter is a maleic anhydride modified polypropylene homo-or copolymer and/or an acrylic acid modified polypropylene homo-or copolymer. Preferably, the adhesion promoter is a maleic anhydride modified polypropylene homopolymer and/or an acrylic acid modified polypropylene homopolymer and preferably a maleic anhydride modified polypropylene homopolymer. For example, suitable polar modified polypropylene (PM-PP) homo- or copolymers include, for example, a polypropylene homopolymer grafted with maleic anhydride (PP-g-MAH) and a polypropylene homopolymer grafted with acrylic acid (PP-g-AA).

The adhesion promoter is preferably present in an amount of 1 to 5 wt, more preferably 1 to 4 wt%, most preferably from 1 to 3 wt%, based on the total weight of the accordant polypropylene composition.

First flame retardant product (A3) and second flame retardant product (B3)

In the second embodiment as described above the first polypropylene composition (A) comprises a first flame retardant product (A3). The first flame retardant product (A3) can also be a mixture of two or more first flame retardant products (A3).

In the second embodiment as described above the second polypropylene composition (B) comprises a second flame retardant product (B3). The second flame retardant product (B3) can also be a mixture of two or more second flame retardants product (B3).

The first flame retardant product (A3) and the second flame retardant product (B3) can be the same or different. It is preferred that the first flame retardant product (A3) and the second flame retardant product (B3) are the same.

The first flame retardant product (A3) and the second flame retardant product (B3) are preferably independently selected from the flame retardant product as specified below.

The following description of the preferred embodiments of the flame retardant product independently applies for both the first flame retardant product (A3) and the second flame retardant product (B3):

The flame retardant product can be any flame retardant product suitable for polypropylene based resins.

Preferably the flame retardant product is free of halogens In other words, it is preferred that the flame retardant product does not contain any organic or inorganic compounds containing halogen atoms. As used herein, the term "halogen" refers to the elements of group 17 of the periodic table.

It is preferred that the flame retardant product is a nitrogen-containing flame retardant product (FR).

It is preferred that the nitrogen-containing flame retardant (FR) comprises at least one nitrogen-containing phosphate, preferably at least one organic nitrogen-containing phosphate. Preferably, said organic nitrogen-containing phosphate is a phosphate of heterocyclic $C_3$-$C_6$-, more preferably $C_3$-$C_4$-alkyl or -aryl compounds comprising at least one N-atom.

According to a preferred embodiment of the present invention, the nitrogen-containing flame retardant (FR) comprises a first nitrogen-containing phosphate (P1) and a second nitrogen-containing phosphate (P2) different from the first nitrogen-containing phosphate (P1).

Preferably, the first nitrogen-containing phosphate (P1) and the second nitrogen-containing phosphate (P2) are organic nitrogen-containing phosphates. It is especially preferred that the first nitrogen-containing phosphate (P1) and the second nitrogen-containing phosphate (P2) are phosphates of heterocyclic $C_3$-$C_6$-, more preferably $C_3$-$C_4$-alkyl or -aryl compounds comprising at least one N-atom.

It is preferred that the first nitrogen-containing phosphate (P1) is an organic nitrogen-containing polyphosphate. More preferably, the first nitrogen-containing phosphate (P1) is a polyphosphate of a heterocyclic $C_3$-$C_6$-, more preferably $C_3$-$C_4$-aryl compound comprising at least one N-atom. It is especially preferred that the first nitrogen-containing phosphate (P1) is melamine polyphosphate.

It is preferred that the second nitrogen-containing phosphate (P2) is an organic nitrogen-containing diphosphate. More preferably, the second nitrogen-containing phosphate (P2) is a diphosphate of a heterocyclic $C_3$-$C_6$-, more preferably $C_3$-$C_4$-alkyl compound comprising at least one N-atom, like two N-atoms. It is especially preferred that the second nitrogen-containing phosphate (P2) is piperazine pyrophosphate.

According to a preferred embodiment of the present invention, the weight ratio between the first nitrogen-containing phosphate (P1) and the second nitrogen-containing phosphate (P2) is in the range of 60:40 to 40:60.

Suitable nitrogen-containing flame retardants (FR) are preferably commercially available. A highly suitable example of a commercial nitrogen-containing flame retardant (FR) is the flame retardant product sold under the trade name Phlamoon-1090A, produced and supplied by SULI.

The amount of the nitrogen-containing flame retardant (FR) means herein the amount based on the overall weight of the first polypropylene composition (A) or the second polypropylene composition (B) of the nitrogen-containing flame retardant (FR) as supplied by the producer thereof. Accordingly, the nitrogen-containing flame retardant (FR) may contain further components in minor amounts, like additives, flame retardant synergists and/or carrier medium. Thus it is to be understood that such further components are calculated to the amount of the nitrogen-containing flame retardant (FR).

Polypropylene compound (C)

The polypropylene compound (C) is obtainable by at least compounding

1 to 25 wt%, preferably 2 to 23 wt%, more preferably 3 to 20 wt% of the first polypropylene composition (A); and
75 to 99 wt%, preferably 77 to 98 wt%, more preferably 80 to 97 wt% of the second polypropylene composition (B), to obtain a first polypropylene compound (C1), wherein the weight amounts are based on the total weight of the first polypropylene compound (C1).

In a first embodiment the polypropylene compound (C) is the first polypropylene compound (C1).

For obtaining the polypropylene compound (C) 1 to 25 wt%, preferably 2 to 23 wt%, more preferably 3 to 20 wt% of the first polypropylene compound (C1) can be further compounded to obtain the second polypropylene compound (C2).

The first polypropylene compound (C1) thereby can be compounded with 75 to 99 wt%, preferably 77 to 98 wt%, more preferably 80 to 97 wt% of a polypropylene composition, preferably the second polypropylene composition (B).

In a second embodiment the polypropylene compound (C) is the second polypropylene compound (C2).

For obtaining the polypropylene compound (C) 1 to 25 wt%, preferably 2 to 23 wt%, more preferably 3 to 20 wt% of the second polypropylene compound (C2) can be further compounded to obtain the third polypropylene compound (C3).

The second polypropylene compound (C2) thereby can be compounded with 75 to 99 wt%, preferably 77 to 98 wt%, more preferably 80 to 97 wt% of a polypropylene composition, preferably the second polypropylene composition (B).

In a third embodiment the polypropylene compound (C) is the third polypropylene compound (C3).

For obtaining the polypropylene compound (C) 1 to 25 wt%, preferably 2 to 23 wt%, more preferably 3 to 20 wt% of the third polypropylene compound (C3) can be further compounded to obtain the fourth polypropylene compound (C4).

The third polypropylene compound (C3) thereby can be compounded with 75 to 99 wt%, preferably 77 to 98 wt%, more preferably 80 to 97 wt% of a polypropylene composition, preferably the second polypropylene composition (B).

In a fourth embodiment the polypropylene compound (C) is the fourth polypropylene compound (C4).

For obtaining the polypropylene compound (C) 1 to 25 wt%, preferably 2 to 23 wt%, more preferably 3 to 20 wt% of the fourth polypropylene compound (C4) can be further compounded to obtain the fifth polypropylene compound (C5).

The fourth polypropylene compound (C4) thereby can be compounded with 75 to 99 wt%, preferably 77 to 98 wt%, more preferably 80 to 97 wt% of a polypropylene composition, preferably the second polypropylene composition (B).

In a fifth embodiment the polypropylene compound (C) is the fifth polypropylene compound (C5).

For obtaining the polypropylene compound (C) one or more further compounding steps can be conducted in which the fifth polypropylene compound (C5) is further compounded.

The polypropylene compound (C) is usually obtainable by 1 to 10, preferably by 1 to 8, more preferably by 2 to 7, still more preferably by 3 to 6, most preferably by 4 to 5 compounding steps in which the obtained polypropylene compound of the first or previous compounding step is further compounded optionally in the presence of a polypropylene composition such as the second polypropylene composition (B).

The number of compounding steps thereby usually depends on the properties of the polypropylene compound (C). As soon as one of the polypropylene compounds (C1), (C2), (C3), (C4) or (C5) has the desired properties of the polypropylene compound (C) further compounding steps can be omitted and the accordant polypropylene compound (C1), (C2), (C3), (C4) or (C5) is the polypropylene compound (C). In the case that the fifth polypropylene compound (C5) does not meet the desired properties, further compounding steps can be conducted.

The 1 to 10 compounding steps are preferably conducted in an extruder such as a co-rotating twin screw extruder at a temperature sufficient for compounding the components (A), (B) and optionally (C1) to (C5). The temperature is preferably selected as to avoid decomposition of components in the components (A), (B) and optionally (C1) to (C5), especially in respect to the optional flame retardant (FR). The temperature is typically <200 °C or <230 °C.

The polypropylene compound (C) preferably has one or more, preferably all of the following properties:

- a melt flow rate $MFR_2$ (2.16 kg, 230°C) of from 4.0 to 10.0 g/10 min, preferably from 5.0 to 8.0 g/10 min;
- a tensile modulus of from 4750 to 7500 MPa, preferably from 5000 to 6250 MPa;
- a tensile strength of from 25 to 125 MPa, preferably from 35 to 110 MPa; and/or
- a Charpy Notched impact strength at 23°C of from 6 to 17 kJ/m$^2$, preferably from 8 to 15 kJ/m$^2$; and/or
- a UL94 classification of V-0 in the UL94 flame retardancy test.

It has surprisingly been found that the polypropylene compound (C) has comparable properties as the second polypropylene composition (B).

It is preferred that the polypropylene compound (C) has one or more, preferably all of the following properties in comparison to the second polypropylene composition (B):

- a melt flow rate $MFR_2$ (2.16 kg, 230°C) of from 100% to 120%, preferably from 100% to 115% of the a melt flow rate $MFR_2$ (2.16 kg, 230°C) of the polypropylene composition (B);
- a tensile modulus of from 90% to 115%, preferably from 100% to 110% of the tensile modulus of the polypropylene composition (B);
- a tensile strength of from 60% to 200%, preferably from 80% to 200% of the tensile strength of the polypropylene composition (B); and/or
- a Charpy Notched impact strength at 23°C of from 90% to 115%, preferably from 100% to 110% of the Charpy Notched impact strength of the polypropylene composition (B).

In one embodiment the polypropylene compound (C) is obtainable by at least compounding the first polypropylene composition (A) and the second polypropylene composition (B),

wherein
the first polypropylene composition (A) comprises

    (A1) 50 to 97 wt%, preferably 55 to 95 wt%, more preferably 57 to 93 wt%, most preferably 60 to 90 wt% of the first polypropylene based resin; and

(A2) 3 to 50 wt%, preferably 5 to 45 wt%, more preferably 7 to 43 wt%, most preferably 10 to 40 wt% of the first inorganic filler,

wherein the weight amounts are based on the total weight of the first polypropylene composition (A); and the second polypropylene composition (B) comprises

(B1) 50 to 97 wt%, preferably 55 to 95 wt%, more preferably 57 to 93 wt%, most preferably 60 to 90 wt% of the second polypropylene-based resin ; and

(B2) 3 to 50 wt%, preferably 5 to 45 wt%, more preferably 7 to 43 wt%, most preferably 10 to 40 wt% of the second inorganic filler,

wherein the weight amounts are based on the total weight of the second polypropylene composition (B).

In said embodiment it is preferred that the second polypropylene-based resin (B1) is a virgin propylene based polymer, preferably comprising, more preferably being a heterophasic propylene copolymer (HECO).

It is further preferred that the first inorganic filler (A2) and the second inorganic filler (B2) are independently selected from glass fibers.

Said glass fibers preferably have an initial average length in the range of 2.0 to 10.0 mm.

The first polypropylene composition (A) preferably is a mixed plastics polypropylene blend from industrial waste, preferably a mixed plastics polypropylene blend from production waste, comprising from 75 to 100 wt%, preferably consisting of, industrial waste, preferably production waste, of the second polypropylene composition (B), based on the total weight of the first polypropylene composition (A).

The second polypropylene-based resin (B1) is preferably a virgin propylene based polymer, preferably comprising, more preferably being a heterophasic propylene copolymer (HECO).

In a second embodiment the polypropylene compound (C) is obtainable by at least compounding the first polypropylene composition (A) and the second polypropylene composition (B), wherein

the first polypropylene composition (A) comprises

(A1) 25 to 92 wt%, preferably 30 to 85 wt%, more preferably 35 to 78 wt%, most preferably 40 to 70 wt% of the first polypropylene based resin;

(A2) 3 to 50 wt%, preferably 5 to 45 wt%, more preferably 7 to 43 wt%, most preferably 10 to 40 wt% of the first inorganic filler ;

(A3) 5 to 40 wt%, preferably 10 to 35 wt%, more preferably 15 to 33 wt%, most preferably 20 to 30 wt% of the first flame retardant product,

wherein the weight amounts are based on the total weight of the first polypropylene composition (A); and the second polypropylene composition (B) comprises

(B1) 25 to 92 wt%, preferably 30 to 85 wt%, more preferably 35 to 78 wt%, most preferably 10 to 70 wt% of the second polypropylene based resin;

(B2) 3 to 50 wt%, preferably 5 to 45 wt%, more preferably 7 to 43 wt%, most preferably 10 to 40 wt% of the second inorganic filler;

(B3) 5 to 40 wt%, preferably 10 to 35 wt%, more preferably 12 to 33 wt%, most preferably 20 to 30 wt% of the second flame retardant product,

wherein the weight amounts are based on the total weight of the second polypropylene composition (B).

In said embodiment, the first flame retardant product (A3) and the second flame retardant product (B3) are preferably independently selected from nitrogen containing flame retardant products, which comprises a first nitrogen-containing phosphate (P1) and a second nitrogen-containing phosphate (P2), preferably in the range of 60:40 to 40:60, wherein preferably the first nitrogen-containing phosphate (P1) is melamine polyphosphate and the second nitrogen-containing phosphate (P2) is piperazine pyrophosphate

It is further preferred that the first inorganic filler (A2) and the second inorganic filler (B2) are independently selected from glass fibers.

Said glass fibers preferably have an initial average length in the range of 2.0 to 10.0 mm.

The first polypropylene composition (A) preferably is a mixed plastics polypropylene blend from industrial waste,

preferably a mixed plastics polypropylene blend from production waste, comprising from 75 to 100 wt%, preferably consisting of, industrial waste, preferably production waste, of the second polypropylene composition (B), based on the total weight of the first polypropylene composition (A).

The second polypropylene-based resin (B1) is preferably a virgin propylene based polymer, preferably comprising, more preferably being a heterophasic propylene copolymer (HECO).

Process

The present invention further relates to a process for producing a polypropylene compound (C) comprising the steps of:

(i) compounding at least components (A) and (B)

1 to 25 wt%, preferably 2 to 23 wt%, more preferably 3 to 20 wt% of a first polypropylene composition (A); and 75 to 99 wt%, preferably 77 to 98 wt%, more preferably 80 to 97 wt% of a second polypropylene composition (B), to obtain a first polypropylene compound (C1), wherein the weight amounts are based on the total weight of the first polypropylene compound (C1);

(ii) optionally compounding at least components (B) and (C1)

1 to 25 wt%, preferably 2 to 23 wt%, more preferably 3 to 20 wt% of the first polypropylene compound (C1); and 75 to 99 wt%, preferably 77 to 98 wt%, more preferably 80 to 97 wt% of the second polypropylene composition (B); to obtain a second polypropylene compound (C2), wherein the weight amounts are based on the total weight of the second polypropylene compound (C2);

(iii) optionally compounding at least components (B) and (C2)

1 to 25 wt%, preferably 2 to 23 wt%, more preferably 3 to 20 wt% of the second polypropylene compound (C2); and 75 to 99 wt%, preferably 77 to 98 wt%, more preferably 80 to 97 wt% of the second polypropylene composition (B) to obtain a third polypropylene compound (C3), wherein the weight amounts are based on the total weight of the third polypropylene compound (C3);

(iv) optionally compounding at least components (B) and (C3)

1 to 25 wt%, preferably 2 to 23 wt%, more preferably 3 to 20 wt% of the third polypropylene compound (C3); and 75 to 99 wt%, preferably 77 to 98 wt%, more preferably 80 to 97 wt% of the second polypropylene composition (B), to obtain a fourth polypropylene compound (C4), wherein the weight amounts are based on the total weight of the fourth polypropylene compound (C4);

(v) optionally compounding at least components (B) and (C4)

1 to 25 wt%, preferably 2 to 23 wt%, more preferably 3 to 20 wt% of the fourth polypropylene compound (C4), and 75 to 99 wt%, preferably 77 to 98 wt%, more preferably 80 to 97 wt% of the second polypropylene composition (B), to obtain a fifth polypropylene compound (C5), wherein the weight amounts are based on the total weight of the fifth polypropylene compound (C5); and

(vi) obtaining the polypropylene compound (C);

wherein
the first polypropylene composition (A) comprises

(A1) 25 to 97 wt%, preferably 30 to 94 wt%, more preferably more preferably 35 to 93 wt%, most preferably 40 to 90 wt% of a first polypropylene-based resin having an amount of propylene monomer units of from 60 to 100 wt%, based on the total amount of monomer units of the base resin;

(A2) 3 to 50 wt%, preferably 5 to 45 wt%, more preferably 7 to 43 wt%, most preferably 10 to 40 wt% of a first inorganic filler,

wherein the weight amounts are based on the total weight of the first polypropylene composition (A); and

the second polypropylene composition (B) comprises

(B1) 25 to 97 wt%, preferably 30 to 95 wt%, more preferably more preferably 35 to 93 wt%, most preferably 40 to 90 wt% of a second polypropylene-based resin having an amount of propylene monomer units of from 60 to 100 wt%, based on the total amount of monomer units of the base resin;
(B2) 3 to 50 wt%, preferably 5 to 45 wt%, more preferably 7 to 43 wt%, most preferably 10 to 40 wt% of a second inorganic filler,

wherein the weight amounts are based on the total weight of the second polypropylene composition (B).

Thereby all embodiments as described above or below related to the compounding step(s) and the polypropylene compound (C) also relate the said process of the invention.

Article

Still further, the present invention relates to an article comprising the polypropylene compound (C) as described above or below.
The present invention in particular relates to an article comprising at least 60 wt%, more preferably at least 80 wt%, still more preferably at least 90 wt%, like at least 95 wt% or at least 99 wt%, of the polypropylene composition (C) as defined above. In an especially preferred embodiment the present invention relates to an article consisting of the polypropylene composition (C) as defined above.
The article is preferably an automotive article, such as an automotive article in the field of electronic components such as an electric cable insulation, housings of electric devices, containers and parts of power electronic components of automobile parts and home electric appliance parts, and the like.
Thereby all embodiments as described above or below related to the process, the compounding step(s) and the polypropylene compound (C) also relate the said process of the invention.
The present invention will now be described in further detail by the examples provided below.

**Examples**

1. Measuring methods

The following definitions of terms and determination methods apply for the above general description of the invention as well as to the below examples unless otherwise defined.
**$MFR_2$ (230 °C)** was measured according to ISO 1133 (230 °C, 2.16 kg load).
**$MFR_2$ (190 °C)** was measured according to ISO 1133 (190 °C, 2.16 kg load).

**Quantification of microstructure by NMR spectroscopy**

Quantitative nuclear-magnetic resonance (NMR) spectroscopy was used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.
Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950.

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed. The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[\text{mmmm}]\,\% = 100 * (\,\text{mmmm}\,/\,\text{sum of all pentads}\,)$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (\,I_{e6} + I_{e8}\,)\,/\,2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\,\text{mol}\% = 100 * (\,P_{21e}\,/\,P_{total}\,)$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This

method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Density:** ISO 1183, measured on compression moulded plaques.

**Intrinsic viscosity (IV)** of propylene homopolymers and copolymers is measured according to DIN ISO 1628/1, October 1999 (in Decalin at 135 °C).

**The xylene cold solubles (XCS, wt%):** Content of xylene cold solubles (XCS) was determined at 25 °C according ISO 16152; first edition; 2005-07-01.

**DSC analysis, melting temperature (Tm) and crystallization temperature (Tc):** measured with a TA Instrument Q2000 differential scanning calorimetry (DSC) on 5 to 7 mg samples. DSC is run according to ISO 11357 / part 3 / method C2 in a heat / cool /heat cycle with a scan rate of 10°C/min in the temperature range of -30°C to +225°C. Crystallization temperature and heat of crystallization (Hc) are determined from the cooling step, while melting temperature and heat of fusion (Hf) are determined from the second heating step.

**Charpy notched impact strength** was determined according to ISO 179-1 / 1eA at 23 °C and -30 °C by using injection moulded test specimens (80 x 10 x 4 mm) prepared according to EN ISO 1873-2.

Tensile properties were determined on injection moulded dogbone specimens of 4 mm thickness prepared in accordance with EN ISO 1873-2. Tensile modulus and tensile strength were determined according to ISO 527-2 (crosshead speed = 1 mm/min; test speed = 50 mm/min 23°C).

**Average fiber diameter** is determined according to ISO 1888:2006(E), Method B.

**UL94 Vertical burning test** was performed according to UL 94: 2016. The samples are injection moulded in pieces 125±5 mm length, 13.0±0.5 mm width and a thickness of 0.8 to 3.2 mm. Under condition part 1, the samples must be conditioned in a constant room temperature of 23±2 °C and 50±10% humidity for 48 hours. Under condition part 2, the samples must be conditioned in an air-circulating oven for 168 hours at 70 ± 1 °C and then cooled in the desiccator for at least 4 hours at room temperature, prior to testing. Testing must take place within 30 minutes of the samples being taken from the conditioning. The sample is hanged vertically in the test chamber and subjected to a first ignition for 10 sec, then a second ignition for another 10 sec. The burning time after each ignition is recorded and it is also noted if there is afterglow, burning dripping that ignites the cotton in the bottom of the chamber and if there is flames or glow up to holding clamp. Classifications are V-0, V-1, V-2 or no classification, and the classification is dependent on the thickness of the test object.

## 2. Examples

**The propylene polymer (PP)**

**Catalyst preparation**

The catalyst for the preparation of PP was prepared as follows:

3,4 litre of 2-ethylhexanol and 810 mL of propylene glycol butyl monoether (in a molar ratio 4/1) were added to a 20 L reactor. Then 7.8 litre of a 20 % solution in toluene of BEM (butyl ethyl magnesium) provided by Crompton GmbH were slowly added to the well stirred alcohol mixture. During the addition the temperature was kept at 10 °C. After addition the temperature of the reaction mixture was raised to 60 °C and mixing was continued at this temperature for 30 minutes. Finally after cooling to room temperature the obtained Mg-alkoxide was transferred to storage vessel. 21.2 g of Mg alkoxide prepared above was mixed with 4.0 mL bis(2-ethylhexyl) citraconate for 5 min. After mixing the obtained Mg complex was used immediately in the preparation of catalyst component. 19.5 mL titanium tetrachloride was placed in a 300 mL reactor equipped with a mechanical stirrer at 25°C. Mixing speed was adjusted to 170 rpm. 26.0 of Mg-complex prepared above was added within 30 minutes keeping the temperature at 25 °C .3.0 mL of Viscoplex 1-254 and 1.0 mL of a toluene solution with 2 mg Necadd 447 was added. Then 24.0 mL of heptane was added to form an emulsion. Mixing was continued for 30 minutes at 25 °C. Then the reactor temperature was raised to 90°C within 30 minutes. The reaction mixture was stirred for further 30 minutes at 90°C. Afterwards stirring was stopped and the reaction mixture was allowed to settle for 15 minutes at 90°C.

The solid material was washed 5 times: Washings were made at 80 °C under stirring 30 min with 170 rpm. After stirring was stopped the reaction mixture was allowed to settle for 20-30 minutes and followed by siphoning.

Wash 1: Washing was made with a mixture of 100 ml of toluene and 1 mL donor
Wash 2: Washing was made with a mixture of 30 ml of TiCl$_4$ and 1 mL of donor.
Wash 3: Washing was made with 100 mL toluene.
Wash 4: Washing was made with 60 mL of heptane.
Wash 5. Washing was made with 60 mL of heptane under 10 minutes stirring.

Afterwards stirring was stopped and the reaction mixture was allowed to settle for 10 minutes decreasing the temperature to 70°C with subsequent siphoning, and followed by N$_2$ sparging for 20 minutes to yield an air sensitive powder.

VCH modification of the catalyst 35 mL of mineral oil (Paraffinum Liquidum PL68) was added to a 125 mL stainless steel reactor followed by 0.82 g of triethyl aluminium (TEAL) and 0.33 g of dicyclopentyl dimethoxy silane (donor D) under inert conditions at room temperature. After 10 minutes 5.0 g of the catalyst prepared in 1a (Ti content 1,4 wt%) was added and after additionally 20 minutes 5.0 g of vinylcyclohexane (VCH) was added.).The temperature was increased to 60 °C during 30 minutes and was kept there for 20 hours. Finally, the temperature was decreased to 20 °C and the concentration of unreacted VCH in the oil/catalyst mixture was analyzed and was found to be 120 ppm weight.

**Preparation of the propylene polymer PP**

The conditions for the preparation of the propylene polymer PP are summarized in Table 1.

Table 1: Preparation and properties of the propylene polymer PP

|  |  | PP |
|---|---|---|
| **Prepolymerization** |  |  |
| Co/Donor | [mol/mol] | 20 |
| Co/Ti | [mol/mol] | 250 |
| Temperature | [°C] | 21 |
| Residence time | [min] | 20 |
| **Loop (R1)** |  |  |
| Temperature | [°C] | 80 |

(continued)

| Loop (R1) | | |
|---|---|---|
| Split | [wt%] | 51 |
| H2/C3 | [mol/kmol] | 6.40 |
| MFR | [g/10min] | 42 |
| **GPR1 (R2)** | | |
| Temperature | [°C] | 80 |
| Split | [wt%] | 30 |
| H2/C3 | [mol/kmol] | 69.3 |
| MFR | [g/10min] | 42 |
| XCS | [wt%] | 2.0 |
| **GPR2 (R3)** | | |
| Temperature | [°C] | 80 |
| C2/C3 | [mol/kmol] | 399 |
| H2/C2 | [mol/kmol] | 84 |
| Split | [wt%] | 19 |
| MFR | [g/10min] | 19.0 |
| **Final** | | |
| XCS | [wt%] | 17.5 |
| C2 (total) | [mol-%] | 7.5 |
| C2 (XCS) | [mol-%] | 43.6 |
| IV (XCS) | [dL/g] | 2.6 |
| MFR | [g/10 min] | 20 |
| $T_m$ | [°C] | 166 |
| $T_c$ | [°C] | 130 |
| density | [kg/m$^3$] | 905 |

**Preparation of the second polypropylene composition (B)**

For the production of the second polypropylene composition (B) of examples CE1, IE1 and IE2 56.5 wt% propylene polymer PP was melt blended in a co-rotating twin screw extruder (ThermoFisher TSE 24 MC) with 25 wt% flame retardant composition (FR), 20 wt% glass fibers (GF) and 1.5 wt% adhesion promoter (AP) as listed below. The temperatures were kept low at <200 °C, so as the FR does not degrade in the compounding process.

For the production of the second polypropylene composition (B) of examples CE2, CE3 and CE4 66.8 wt% propylene polymer PP was melt blended in a co-rotating twin screw extruder (ThermoFisher TSE 24 MC) with 8 wt% high density polyethylene (HDPE), 25 wt% flame retardant composition (FR) and 0.2 wt% anti-dripping agent (AD) as listed below. No inorganic filler was introduced to the second polypropylene composition (B). The temperatures were kept low at <200 °C, so as the FR does not degrade in the compounding process.

HDPE is the commercial high density polyethylene MB7541 of Borealis AG having a MFR (190°C/2.16kg, ISO 1133) of 4 g/10 min and a density (ISO1183) of 954 kg/m$^3$.

FR is the commercial flame retardant composition Phlamoon-1090A of SULI comprising 55 to 60 wt.-% melamine polyphosphate and 40 to 55 wt.-% piperazine pyrophosphate.

GF is the commercial product ChopVantage HP 3299 of Nippon Electric Glass Co., Ltd. having a nominal fiber diameter of 13.0 μm and a nominal chop length of 4.5 mm.

AP is the adhesion promoter SCONA TPPP 8112 GA by Scona being a polypropylene functionalized with maleic anhydride having a maleic anhydride content of 1.4 wt% and a MFR (190 °C, 2.16 kg) above 80 g/10 min.

**AD** is TF 2025 Z PTFE by Dyneon being a polytetrafluoroethylene with a bulk density of 480 g/1 (DIN EN ISO 60) and an average particle size of 500 nm (ISO 13320). TF 2025 Z PTFE is used as anti-dripping agent.

The properties of the second polypropylene composition (B) of examples IE1, IE2 and CE1 are listed in Table 2 below as sample number 002.

The properties of the second polypropylene composition (B) of examples CE2, CE3 and CE4 are listed in Table 3 below as sample number 001.

**Preparation of the first polypropylene composition (A)**

For the production of the first polypropylene composition (A) of examples IE1, IE2 and CE1 the second polypropylene composition (B) (sample number 002 in Table 2) is again compounded in a co-rotating twin screw extruder (ThermoFisher TSE 24 MC) without addition of other components. The temperatures were kept low at <230 °C, so as the FR does not degrade in the recompounding process. The properties of the first polypropylene composition (A) are listed in Table 2 below as sample number 018.

For the production of the first polypropylene composition (A) of examples CE2, CE3 and CE4 the second polypropylene composition (B) (sample number 001 in Table 3) is again compounded in a co-rotating twin screw extruder (ThermoFisher TSE 24 MC) without addition of other components. The temperatures were kept low at <230 °C, so as the FR does not degrade in the recompounding process. The properties of the first polypropylene composition (A) are listed in Table 3 below as sample number 003.

**Preparation of the polypropylene compound (C)**

For the production of the polypropylene compound (C) of the examples CE1, IE1 and IE2 different amounts of the first polypropylene composition (A) (sample number 018 in Table 2) are compounded in a co-rotating twin screw extruder (ThermoFisher TSE 24 MC) with the second polypropylene composition (B) (sample number 002 in Table 2). The resultant polypropylene compound is then again compounded in a co-rotating twin screw extruder (ThermoFisher TSE 24 MC) with the second polypropylene composition (B) (sample number 002 in Table 2). Said compounding step of the resultant polypropylene compound with in a co-rotating twin screw extruder (ThermoFisher TSE 24 MC) with the second polypropylene composition (B) (sample number 002 in Table 2) is the repeated three times for CE1 and four times for IE1 and IE2.

In all recompounding steps the temperatures were kept low at <230 °C, so as the FR does not degrade in the recompounding processes.

For comparative example CE1 the first polypropylene composition (A) (sample number 018 in Table 2) and each resultant compound (sample numbers 019, 020, 021) are recompounded without addition of the first polypropylene composition (B).

For inventive example IE1 25 wt% of the first polypropylene composition (A) (sample number 018 in Table 2) and each resultant compound (sample numbers 023, 024, 025, 026 - corresponding to compounds (C1), (C2), (C3), (C4)) are recompounded with 75 wt% of the first polypropylene composition (B). Sample number 027 corresponds to compound (C5).

For inventive example IE2 5 wt% of the first polypropylene composition (A) (sample number 018 in Table 2) and each resultant compound (sample numbers 028, 029, 030, 031 - corresponding to compounds (C1), (C2), (C3), (C4),) are recompounded with 95 wt% of the first polypropylene composition (B). Sample number 032 corresponds to compound (C5).

The pellets of each sample were moulded to flame test specimens and to specimens according to ISO 294. In addition to this, the specimens were shredded and injection moulded again to investigate how the reprocessing steps influence the material properties.

For comparability of the samples the compounding conditions for each recompounding step are kept constant using the same co-rotating twin screw extruder ThermoFisher TSE 24 MC.

Table 2: Compounding scheme and properties of examples CE1, IE1 and IE2

|  | Sample # | Sample name | Tensile Modulus [MPa] | Tensile Strength [MPa] | Charpy NIS [kJ/m$^2$] | MFR$_2$ [g/ 10min] | UL94 classification @ 1.6 mm |
|---|---|---|---|---|---|---|---|
| CE1 | 002 | Virgin | 5 530,00 | 50,00 | 10,71 | 6,59 | V-0 |

(continued)

|  | | Sample # | Sample name | Tensile Modulus [MPa] | Tensile Strength [MPa] | Charpy NIS [kJ/m$^2$] | MFR$_2$ [g/ 10min] | UL94 classification @ 1.6 mm |
|---|---|---|---|---|---|---|---|---|
|  | | 018 | 100% 002 --> 1x recycled | 5 170,00 | 60,00 | 8,62 | 7,94 | V-0 |
|  | | 019 | 100% 018 --> 2x recycled | 5 040,00 | 50,00 | 8,01 | 10,41 | V-2 |
|  | | 020 | 100% 019 --> 3x recycled | 4 830,00 | 50,00 | 7,40 | 10,80 | V-2 |
|  | | 021 | 100% 020 --> 4x recycled | 4 780,00 | 50,00 | 6,45 | 11,70 | V-2 |
|  | | 022 | 100% 021 --> 5x recycled | 4 580,00 | 30,00 | 5,90 | 12,89 | V-2 |
| IE1 | | 023 | 75% 002 (Compound) + 25% 018 (recycled) corresponds to (C1) | 5 250,00 | 30,00 | 10,04 | 6,61 | V-0 |
|  | | 024 | 75% 002 (Compound) + 25% 023 (recycled) corresponds to (C2) | 5 280,00 | 60,00 | 9,92 | 6,61 | V-0 |
|  | | 025 | 75% 002 (Compound) + 25% 024 (recycled) corresponds to (C3) | 5 310,00 | 40,00 | 10,12 | 6,85 | V-0 |
|  | | 026 | 75% 002 (Compound) + 25% 025 (recycled) corresponds to (C4) | 5 510,00 | 100,00 | 10,61 | 6,98 | V-0 |
|  | | 027 | 75% 002 (Compound) + 25% 026 (recycled) corresponds to (C5) | 5 760,00 | 30,00 | 11,00 | 7,31 | V-2 |
| IE2 | | 028 | 95% 002 (Compound) + 5 % 018 (recycled) corresponds to (C1) | 5 780,00 | 90,00 | 11,47 | 7,02 | V-0 |
|  | | 029 | 95% 002 (Compound) + 5% 028 (recycled) corresponds to (C2) | 5 890,00 | 40,00 | 11,22 | 7,02 | V-0 |
|  | | 030 | 95% 002 (Compound) + 5% 029 (recycled) corresponds to (C3) | 5 920,00 | 50,00 | 11,30 | 6,95 | V-0 |
|  | | 031 | 95% 002 (Compound) + 5% 030 (recycled) corresponds to (C4) | 5 900,00 | 70,00 | 11,42 | 6,84 | V-0 |
|  | | 032 | 95% 002 (Compound) + 5% 031 (recycled) corresponds to (C5) | 5 910,00 | 40,00 | 11,32 | 6,98 | V-0 |

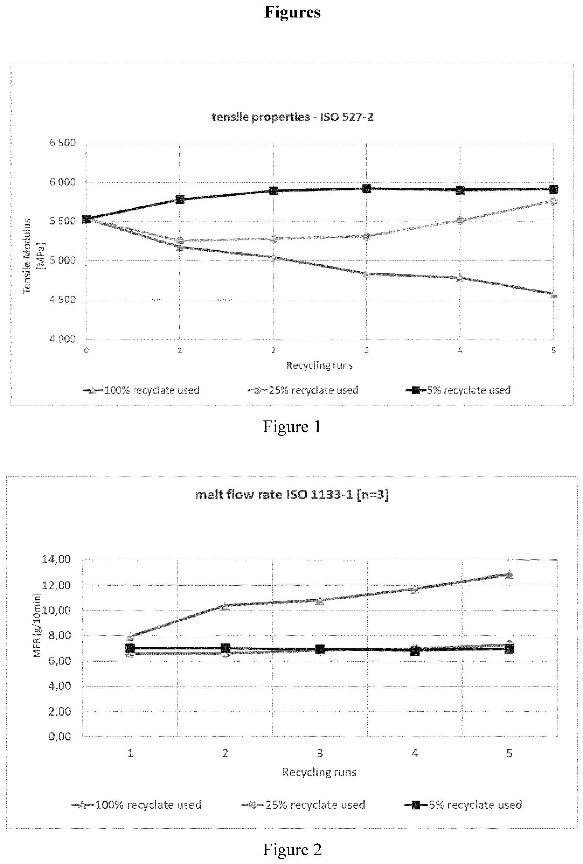

Figure 1 shows the development of the tensile modulus over the compounding steps (recycling runs) of examples CE1 (100% recyclate used), IE1 (25% recyclate used) and IE2 (5% recyclate used).

For comparative CE1 after each compounding step the tensile modulus decreases.

For inventive example IE1 the tensile modulus decreases at a lesser extent as for CE1 after the first compounding step and maintains at a comparable value after the second and third compounding step. After the fourth and fifth compounding step the tensile modulus surprisingly increases to a value higher than that of the second polypropylene composition (B).

For inventive example IE1 the tensile modulus surprisingly increases after the first and second compounding step to a value higher than that of the second polypropylene composition (B). Said high value is then maintained after the third to fifth compounding step.

Figure 2 shows the development of the melt flow rate $MFR_2$ over the compounding steps (recycling runs) of examples CE1 (100% recycle used), IE1 (25% recycle used) and IE2 (5% recycle used).

For comparative CE1 after each compounding step the $MFR_2$ increases, indicating a deterioration of the polymer chains.

For inventive examples IE1 and IE2 the $MFR_2$ maintains at a comparable value after each compounding step, indicating that the polymer chains are not deteriorated during compounding.

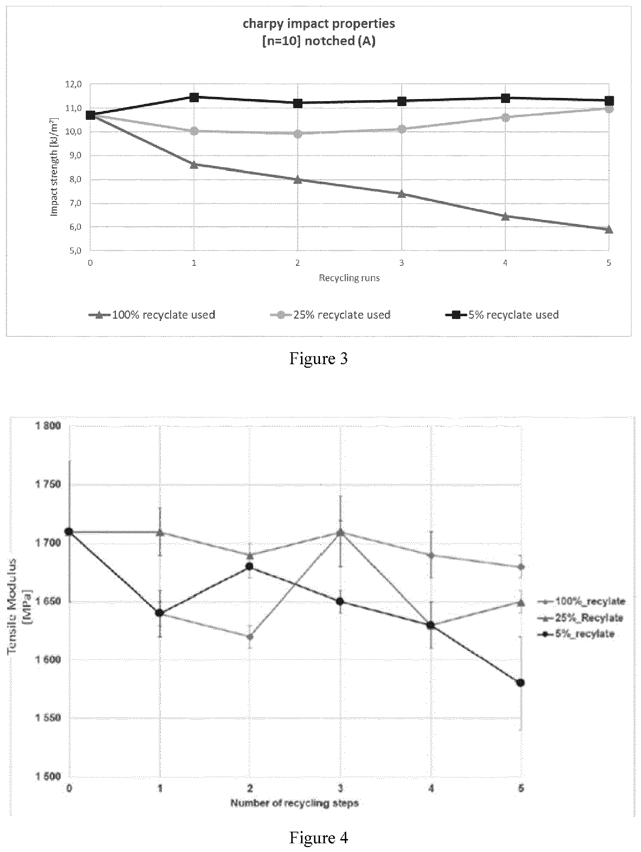

Figure 3 shows the development of the Charpy notched impact strength over the compounding steps (recycling runs) of examples CE1 (100% recycle used), IE1 (25% recycle used) and IE2 (5% recycle used).

For comparative CE1 after each compounding step the Charpy notched impact strength descreases.

For inventive example IE1 the Charpy notched impact strength decreases at a lesser extent as for CE1 after the first compounding step and maintains at a comparable value after the second and third compounding step. After the fourth and fifth compounding step the Charpy notched impact strength surprisingly increases to a value higher than that of the second polypropylene composition (B).

For inventive example IE1 the Charpy notched impact strength surprisingly increases after the first compounding step to a value higher than that of the second polypropylene composition (B). Said high value is then maintained after the second to fifth compounding step.

For the production of the polypropylene compound (C) of the examples CE2, CE3 and CE4 different amounts of the first polypropylene composition (A) (sample number 003 in Table 3) are compounded in a co-rotating twin screw extruder (ThermoFisher TSE 24 MC) with the second polypropylene composition (B) (sample number 001 in Table 3). The resultant polypropylene compound is then again compounded in a co-rotating twin screw extruder (ThermoFisher TSE 24 MC) with the second polypropylene composition (B) (sample number 001 in Table 3). Said compounding step of the resultant polypropylene compound with in a co-rotating twin screw extruder (ThermoFisher TSE 24 MC) with the second polypropylene composition (B) (sample number 001 in Table 3) is the repeated three times for CE2 and four times for CE3 and CE4.

In all recompounding steps the temperatures were kept low at <230 °C, so as the FR does not degrade in the recompounding processes.

For comparative example CE2 the first polypropylene composition (A) (sample number 003 in Table 3) and each resultant compound (sample numbers 004, 005, 006) are recompounded without addition of the first polypropylene composition (B).

For comparative example CE3 25 wt% of the first polypropylene composition (A) (sample number 003 in Table 3) and each resultant compound (sample numbers 008, 009, 010, 011) are recompounded with 75 wt% of the first polypropylene composition (B).

For comparative example CE4 5 wt% of the first polypropylene composition (A) (sample number 003 in Table 3) and each resultant compound (sample numbers 013, 014, 015, 016) are recompounded with 95 wt% of the first polypropylene composition (B).

The pellets of each sample were moulded to flame test specimens and to specimens according to ISO 294. In addition to this, the specimens were shredded and injection moulded again to investigate how the reprocessing steps influence the material properties.

For comparability of the samples the compounding conditions for each recompounding step are kept constant using the same co-rotating twin screw extruder ThermoFisher TSE 24 MC.

Table 3: Compounding scheme and properties of examples CE2, CE3 and CE4

| | Sample # | Sample name | Tensile Modulus [MPa] | Tensile Strength [MPa] | Charpy NIS [kJ/m$^2$] | MFR$_2$ [g/10min] | UL94 classification @ 1.6 mm |
|---|---|---|---|---|---|---|---|
| CE2 | 001 | Virgin | 1 710.00 | 60.00 | 3,62 | 9.54 | V-0 |
| | 003 | 100% 001 --> 1x recycled | 1640.00 | 20.00 | 3,74 | 14.4 | V-2 |
| | 004 | 100% 003 --> 2x recycled | 1620.00 | 10.00 | 3,93 | 16.1 | V-2 |
| | 005 | 100% 004 --> 3x recycled | 1710.00 | 30.00 | 3.41 | 16.8 | V-2 |
| | 006 | 100% 005 --> 4x recycled | 1690.00 | 20.00 | 3.14 | 19.0 | V-2 |
| | 007 | 100% 006 --> 5x recycled | 1680.00 | 10.00 | 3.41 | 21.2 | V-2 |
| CE3 | 008 | 75% 001 (Compound) + 25% 003 (recycled) | 1710.00 | 20.00 | 3.43 | 10.4 | V-2 |
| | 009 | 75% 001 (Compound) + 25% 008 (recycled) | 1690.00 | 10.00 | 3.75 | 9.91 | V-2 |
| | 010 | 75% 001 (Compound) + 25% 009 (recycled) | 1710.00 | 10.00 | 3.57 | 9.94 | V-2 |
| | 011 | 75% 001 (Compound) + 25% 010 (recycled) | 1630.00 | 20.00 | 3.58 | 8.76 | V-2 |
| | 012 | 75% 001 (Compound) + 25% 011 (recycled) | 1650.00 | 10.00 | 3.40 | 8.70 | V-2 |
| CE4 | 013 | 95% 001 (Compound) + 5% 003 (recycled) | 1640.00 | 10.00 | 3.57 | 8.49 | V-0 |
| | 014 | 95% 001 (Compound) + 5 % 013 (recycled) | 1680.00 | 10.00 | 3.61 | 8.57 | V-0 |
| | 015 | 95% 001 (Compound) + 5 % 014 (recycled) | 1650.00 | 10.00 | 3.39 | 8.74 | V-0 |
| | 016 | 95% 001 (Compound) + 5% 015 (recycled) | 1630.00 | 20.00 | 3.67 | 8.83 | V-0 |
| | 017 | 95% 001 (Compound) + 5 % 016 (recycled) | 1580.00 | 40.00 | 3.72 | 8.83 | V-0 |

For comparative examples CE2, CE3 and CE4, in which the second polypropylene composition (B) does not comprise an inorganic filler, not the same behaviour after compounding as for inventive examples IE1 and IE2 can be observed.

Figure 4 shows the development of the tensile modulus over the compounding steps (recycling runs) of examples CE2 (100% recyclate used), CE3 (25% recyclate used) and CE4 (5% recyclate used).

The tensile modulus does not show any increase for one of the examples after several recycle runs. Instead a tendency of decrease of tensile modulus over the number of recycle runs can be noted.

Figure 5 shows the development of the melt flow rate MFR$_2$ over the compounding steps (recycling runs) of examples CE2 (100% recyclate used), CE3 (25% recyclate used) and CE4 (5% recyclate used).

For comparative CE2 after each compounding step the MFR$_2$ increases, indicating a deterioration of the polymer chains.

For comparative examples CE3 and CE4 the MFR$_2$ maintains at a comparable value after each compounding step, indicating that the polymer chains are not deteriorated during compounding.

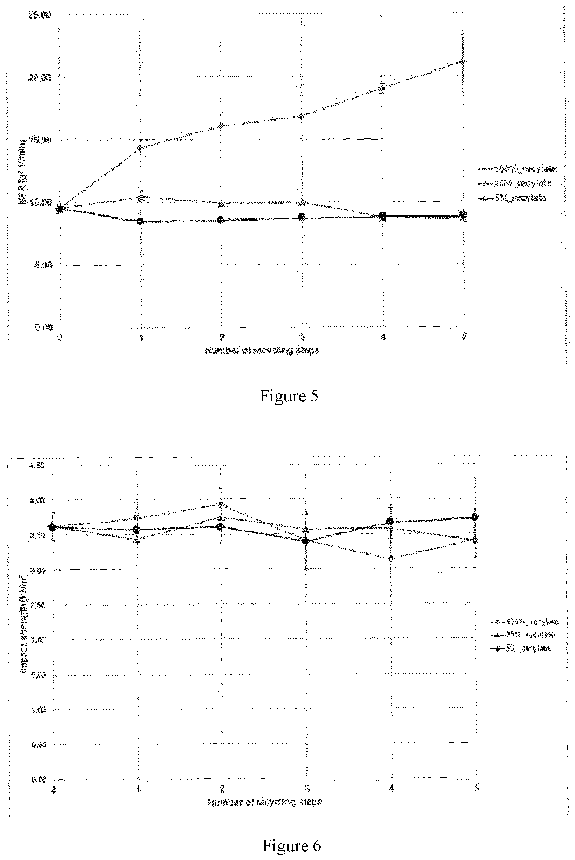

Figure 6 shows the development of the Charpy notched impact strength over the compounding steps (recycling runs) of examples CE2 (100% recyclate used), CE3 (25% recyclate used) and CE4 (5% recyclate used).

No significant change in Charpy notched impact strength can be observed after several recycle runs for any of examples CE2, CE3 and CE4.

**Claims**

1. A polypropylene compound (C) obtainable by a process comprising the following steps:

(i) compounding at least components (A) and (B)

1 to 25 wt%, preferably 2 to 23 wt%, more preferably 3 to 20 wt% of a first polypropylene composition (A); and
75 to 99 wt%, preferably 77 to 98 wt%, more preferably 80 to 97 wt% of a second polypropylene composition (B),
to obtain a first polypropylene compound (C1), wherein the weight amounts are based on the total weight of the first polypropylene compound (C1);

(ii) optionally compounding at least components (B) and (C1)

1 to 25 wt%, preferably 2 to 23 wt%, more preferably 3 to 20 wt% of the first polypropylene compound (C1); and
75 to 99 wt%, preferably 77 to 98 wt%, more preferably 80 to 97 wt% of the second polypropylene composition (B),
to obtain a second polypropylene compound (C2), wherein the weight amounts are based on the total weight of the second polypropylene compound (C2);

(iii) optionally compounding at least components (B) and (C2)

1 to 25 wt%, preferably 2 to 23 wt%, more preferably 3 to 20 wt% of the second polypropylene compound (C2); and
75 to 99 wt%, preferably 77 to 98 wt%, more preferably 80 to 97 wt% of the second polypropylene composition (B),
to obtain a third polypropylene compound (C3), wherein the weight amounts are based on the total weight of the third polypropylene compound (C3);

(iv) optionally compounding at least components (B) and (C3)

1 to 25 wt%, preferably 2 to 23 wt%, more preferably 3 to 20 wt% of the third polypropylene compound (C3); and
75 to 99 wt%, preferably 77 to 98 wt%, more preferably 80 to 97 wt% of the second polypropylene composition (B),
to obtain a fourth polypropylene compound (C4), wherein the weight amounts are based on the total weight of the fourth polypropylene compound (C4);

(v) optionally compounding at least components (B) and (C4)

1 to 25 wt%, preferably 2 to 23 wt%, more preferably 3 to 20 wt% of the fourth polypropylene compound (C4); and
75 to 99 wt%, preferably 77 to 98 wt%, more preferably 80 to 97 wt% of the second polypropylene composition (B),
to obtain a fifth polypropylene compound (C5), wherein the weight amounts are based on the total weight of the fifth polypropylene compound (C5); and

(vi) obtaining the polypropylene compound (C);
wherein
the first polypropylene composition (A) comprises

(A1) 25 to 97 wt%, preferably 30 to 95 wt%, more preferably more preferably 35 to 93 wt%, most preferably 40 to 90 wt% of a first polypropylene-based resin having an amount of propylene monomer units of from 60 to 100 wt%, based on the total amount of monomer units of the resin;
(A2) 3 to 50 wt%, preferably 5 to 45 wt%, more preferably 7 to 43 wt%, most preferably 10 to 40 wt% of a first inorganic filler,

wherein the weight amounts are based on the total weight of the first polypropylene composition (A); and the second polypropylene composition (B) comprises

(B1) 25 to 97 wt%, preferably 30 to 95 wt%, more preferably 35 to 93 wt%, most preferably 40 to 90 wt% of a second polypropylene-based resin having an amount of propylene monomer units of from 60 to 100 wt%, based on the total amount of monomer units of the resin;
(B2) 3 to 50 wt%, preferably 5 to 45 wt%, more preferably 7 to 43 wt%, most preferably 10 to 40 wt% of a second inorganic filler,

wherein the weight amounts are based on the total weight of the second polypropylene composition (B).

2. The polypropylene compound (C) according to claim 1, wherein the first inorganic filler (A2) and the second inorganic filler (B2) are independently selected from fibers, talc and wollastonite.

3. The polypropylene compound (C) according to claims 1 or 2, wherein component (B1) is selected from a virgin propylene-based polymer and a mixed plastics polypropylene blend selected from post-consumer waste or industrial waste.

4. The polypropylene compound (C) according to claim 3, wherein the virgin propylene-based polymer comprises a heterophasic propylene copolymer comprising a matrix phase and an elastomeric phase dispersed in said matrix phase and has one or more, preferably all of the following properties:

• a melt flow rate $MFR_2$ (2.16 kg, 230°C) of from 10 to 30 g/10 min, preferably from 15 to 25 g/10 min;
• a flexural modulus of from 1200 to 1750 MPa, preferably from 1400 to 1600 MPa;
• a tensile modulus of from 1200 to 1750 MPa, preferably from 1400 to 1600 MPa;
• a tensile strain at yield of from 1 to 10%, preferably from 3 to 7%;
• a tensile stress at yield of from 15 to 40 MPa, preferably from 20 to 35 MPa;
• a heat deflection temperature of from 90 to 120°C, preferably from 95 to 110°C;
• a Charpy Notched impact strength at 23°C of from 4 to 15 $kJ/m^2$, preferably from 6 to 12 $kJ/m^2$; and/or
• a Charpy Notched impact strength at -20°C of from 2 to 10 $kJ/m^2$, preferably from 3 to 7 $kJ/m^2$.

5. The polypropylene compound (C) according to any one of the proceeding claims, wherein the second polypropylene composition (B) has one or more, preferably all of the following properties:

• a melt flow rate $MFR_2$ (2.16 kg, 230°C) of from 4.0 to 10.0 g/10 min, preferably from 5.0 to 8.0 g/10 min;
• a Charpy Notched impact strength at 23°C of from 6 to 15 $kJ/m^2$, preferably from 8 to 12 $kJ/m^2$;
• a tensile modulus of from 4750 to 7500 MPa, preferably from 5000 to 6000 MPa; and/or
• a tensile strength of from 35 to 75 MPa, preferably from 45 to 65 MPa.

6. The polypropylene compound (C) according to any one of the proceeding claims, wherein the first polypropylene composition (A) is a mixed plastics polypropylene blend from industrial waste, preferably a mixed plastics polypropylene blend from production waste, comprising from 75 to 100 wt%, preferably consisting of, industrial waste, preferably production waste, of the second polypropylene composition (B), based on the total weight of the first polypropylene composition (A).

7. The polypropylene compound (C) according to any one of the preceding claims, wherein

the first polypropylene composition (A) comprises

(A1) 25 to 92 wt%, preferably 30 to 85 wt%, more preferably 35 to 78 wt%, most preferably 40 to 70 wt% of the first polypropylene-based resin;
(A2) 3 to 50 wt%, preferably 5 to 45 wt%, more preferably 7 to 43 wt%, most preferably 10 to 40 wt% of the first inorganic filler;

(A3) 5 to 40 wt%, preferably 10 to 35 wt%, more preferably 15 to 33 wt%, most preferably 20 to 30 wt% of a first flame retardant product,

wherein the weight amounts are based on the total weight of the first polypropylene composition (A); and the second polypropylene composition (B) comprises

(B1) 25 to 92 wt%, preferably 30 to 85 wt%, more preferably 35 to 78 wt%, most preferably 40 to 70 wt% of the second polypropylene-based resin;
(B2) 3 to 50 wt%, preferably 5 to 45 wt%, more preferably 7 to 43 wt%, most preferably 10 to 40 wt% of the second inorganic filler;
(B3) 5 to 40 wt%, preferably 10 to 35 wt%, more preferably 15 to 33 wt%, most preferably 20 to 30 wt% of a second flame retardant product,

wherein the weight amounts are based on the total weight of the second polypropylene composition (B).

8. The polypropylene compound (C) according to claim 7, wherein the first flame retardant product (A3) and the second flame retardant product (B3) are independently selected from nitrogen containing flame retardant products, which comprises a first nitrogen-containing phosphate (PI) and a second nitrogen-containing phosphate (P2), preferably in the range of 60:40 to 40:60, wherein preferably the first nitrogen-containing phosphate (PI) is melamine polyphosphate and the second nitrogen-containing phosphate (P2) is piperazine pyrophosphate.

9. The polypropylene compound (C) according to claim 7 or 8, wherein the first polypropylene composition (A) preferably is a mixed plastics polypropylene blend from industrial waste preferably a mixed plastics polypropylene blend from production waste, comprising from 75 to 100 wt%, preferably consisting of, industrial waste, preferably production waste, of the second polypropylene composition (B), based on the total weight of the first polypropylene composition (A); and
the first inorganic filler (A2) and the second inorganic filler (B2) are independently selected from glass fibers and wherein the glass fibers preferably have an initial average length in the range of 2.0 to 10.0 mm.

10. The polypropylene compound (C) according to any one of claims 7 to 9, wherein the second polypropylene composition (B) has a UL94 classification of V-0 in the UL94 flame retardancy test.

11. The polypropylene compound (C) according to any one of the preceding claims, wherein the first polypropylene composition (A) further comprises from 0 to 5 wt% of a first adhesion promoter (A4), based on the total weight of the first polypropylene composition (A), and/or the second polypropylene composition (B) further comprises from 0 to 5 wt% of a second adhesion promoter (B4), based on the total weight of the second polypropylene composition (B), wherein the first adhesion promoter (A4) and the second adhesion promoter (B4) are preferably independently selected from a polar modified polypropylene (PM-PP) being a propylene homo- or copolymer grafted with maleic anhydride having a melt flow rate $MFR_2$ (230°C, 2.16 kg) determined according to ISO 1133 of at least 20.0 g/10 min.

12. The polypropylene compound (C) according to any one of the preceding claims having one or more, preferably all of the following properties:

• a melt flow rate $MFR_2$ (2.16 kg, 230°C) of from 4.0 to 10.0 g/10 min, preferably from 5.0 to 8.0 g/10 min;
• a tensile modulus of from 4750 to 7500 MPa, preferably from 5000 to 6250 MPa;
• a tensile strength of from 25 to 125 MPa, preferably from 35 to 110 MPa;
• a Charpy Notched impact strength at 23°C of from 6 to 17 $kJ/m^2$, preferably from 8 to 15 $kJ/m^2$; and/or
• a UL94 classification of V-0 in the UL94 flame retardancy test.

13. The polypropylene compound (C) according to any one of the preceding claims having one or more, preferably all of the following properties:

• a melt flow rate $MFR_2$ (2.16 kg, 230°C) of from 100% to 120%, preferably from 100% to 115% of the a melt flow rate $MFR_2$ (2.16 kg, 230°C) of the polypropylene composition (B);
• a tensile modulus of from 90% to 115%, preferably from 100% to 110% of the tensile modulus of the polypropylene composition (B);
• a tensile strength of from 60% to 200%, preferably from 80% to 200% of the tensile strength of the polypropylene composition (B); and/or

• a Charpy Notched impact strength at 23°C of from 90% to 115%, preferably from 100% to 110% of the Charpy Notched impact strength of the polypropylene composition (B).

**14.** A process for producing a polypropylene compound (C) according to any one of the proceeding claims comprising the steps of:

(i) compounding at least components (A) and (B)

1 to 25 wt%, preferably 2 to 23 wt%, more preferably 3 to 20 wt% of a first polypropylene composition (A); and 75 to 99 wt%, preferably 77 to 98 wt%, more preferably 80 to 97 wt% of a second polypropylene composition (B), to obtain a first polypropylene compound (C1), wherein the weight amounts are based on the total weight of the first polypropylene compound (C1);

(ii) optionally compounding at least components (B) and (C1)

1 to 25 wt%, preferably 2 to 23 wt%, more preferably 3 to 20 wt% of the first polypropylene compound (C1); and 75 to 99 wt%, preferably 77 to 98 wt%, more preferably 80 to 97 wt% of the second polypropylene composition (B); to obtain a second polypropylene compound (C2), wherein the weight amounts are based on the total weight of the second polypropylene compound (C2);

(iii) optionally compounding at least components (B) and (C2)

1 to 25 wt%, preferably 2 to 23 wt%, more preferably 3 to 20 wt% of the second polypropylene compound (C2); and 75 to 99 wt%, preferably 77 to 98 wt%, more preferably 80 to 97 wt% of the second polypropylene composition (B) to obtain a third polypropylene compound (C3), wherein the weight amounts are based on the total weight of the third polypropylene compound (C3);

(iv) optionally compounding at least components (B) and (C3)

1 to 25 wt%, preferably 2 to 23 wt%, more preferably 3 to 20 wt% of the third polypropylene compound (C3); and 75 to 99 wt%, preferably 77 to 98 wt%, more preferably 80 to 97 wt% of the second polypropylene composition (B), to obtain a fourth polypropylene compound (C4), wherein the weight amounts are based on the total weight of the fourth polypropylene compound (C4);

(v) optionally compounding at least components (B) and (C4)

1 to 25 wt%, preferably 2 to 23 wt%, more preferably 3 to 20 wt% of the fourth polypropylene compound (C4), and 75 to 99 wt%, preferably 77 to 98 wt%, more preferably 80 to 97 wt% of the second polypropylene composition (B), to obtain a fifth polypropylene compound (C5), wherein the weight amounts are based on the total weight of the fifth polypropylene compound (C5); and

(vi) obtaining the polypropylene compound (C);
wherein
the first polypropylene composition (A) comprises

(A1) 25 to 97 wt%, preferably 30 to 95 wt%, more preferably 35 to 93 wt%, most preferably 40 to 90 wt% of a first polypropylene-based resin having an amount of propylene monomer units of from 60 to 100 wt%, based on the total amount of monomer units of the resin;
(A2) 3 to 50 wt%, preferably 5 to 45 wt%, more preferably 7 to 43 wt%, most preferably 10 to 40 wt% of a first inorganic filler,

wherein the weight amounts are based on the total weight of the first polypropylene composition (A); and the second polypropylene composition (B) comprises

(B1) 25 to 97 wt%, preferably 30 to 95 wt%, more preferably 35 to 93 wt%, most preferably 40 to 90 wt% of a second polypropylene-based resin having an amount of propylene monomer units of from 60 to 100 wt%, based on the total amount of monomer units of the resin;

(B2) 3 to 50 wt%, preferably 5 to 45 wt%, more preferably 7 to 43 wt%, most preferably 10 to 40 wt% of a second inorganic filler,

wherein the weight amounts are based on the total weight of the second polypropylene composition (B).

15. An article comprising the polypropylene compound (C) according to any one of the proceeding claims, preferably being an automotive article.

**Figures**

Figure 1

Figure 2

Figure 3

Figure 4

Figure 5

Figure 6

Europäisches
Patentamt

European
Patent Office

Office européen
des brevets

## EUROPEAN SEARCH REPORT

**Application Number**

EP 22 15 6610

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/032459 A1 (BOREALIS AG [AT]) 25 February 2021 (2021-02-25) * claim 1 * * examples IE1-IE3; tables 3,4 * * page 1, line 4 - line 8 * * page 9, line 19 - line 25 * * page 39, line 5 - line 10 * ----- | 1-15 | INV. C08L23/12 C08F2/00 C08F210/06 |
| X | WO 2019/224129 A1 (TOTAL RES & TECHNOLOGY FELUY [BE]) 28 November 2019 (2019-11-28) * example E11; tables 1,2,7 * * page 1, line 6 - line 7 * * page 42, line 14 - line 22 * ----- | 1-15 | |
| X | EP 3 165 473 A1 (BOREALIS AG [AT]) 10 May 2017 (2017-05-10) * examples IE1-IE5; tables 1,3 * * paragraphs [0001] - [0005], [0114], [0123] * ----- | 1-15 | |

| TECHNICAL FIELDS SEARCHED (IPC) |
|---|
| C08L C08F |

The present search report has been drawn up for all claims

| Place of search | Date of completion of the search | Examiner |
|---|---|---|
| Munich | 30 June 2022 | van Bergen, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 6610

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2022

| Patent document cited in search report | | Publication date | Patent family member(s) | | Publication date |
|---|---|---|---|---|---|
| WO 2021032459 | A1 | 25-02-2021 | BR 112022002920 | A2 | 10-05-2022 |
| | | | CA 3151495 | A1 | 25-02-2021 |
| | | | CN 114269833 | A | 01-04-2022 |
| | | | EP 4017917 | A1 | 29-06-2022 |
| | | | KR 20220047831 | A | 19-04-2022 |
| | | | WO 2021032459 | A1 | 25-02-2021 |
| WO 2019224129 | A1 | 28-11-2019 | EP 3802689 | A1 | 14-04-2021 |
| | | | WO 2019224129 | A1 | 28-11-2019 |
| EP 3165473 | A1 | 10-05-2017 | BR 112018005269 | A2 | 09-10-2018 |
| | | | CN 108025826 | A | 11-05-2018 |
| | | | EP 3165473 | A1 | 10-05-2017 |
| | | | ES 2663149 | T3 | 11-04-2018 |
| | | | JP 6472576 | B2 | 20-02-2019 |
| | | | JP 2018532859 | A | 08-11-2018 |
| | | | KR 20180066257 | A | 18-06-2018 |
| | | | TW 201723060 | A | 01-07-2017 |
| | | | US 2018215846 | A1 | 02-08-2018 |
| | | | WO 2017076933 | A1 | 11-05-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4506056 A
- US 4753997 A
- EP 1805238 A

### Non-patent literature cited in the description

- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, (28), 1128
- **CHENG, H. N.** *Macromolecules,* 1984, vol. 17, 1950
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **KAKUGO, M. ; NAITO, Y. ; MIZUNUMA, K. ; MIYATAKE, T.** *Macromolecules,* 1982, vol. 15, 1150